(19) Europäisches Patentamt
European Patent Office
Office européen des brevets

(11) **EP 4 507 189 A1**

(12) **EUROPEAN PATENT APPLICATION**
published in accordance with Art. 153(4) EPC

(43) Date of publication:
**12.02.2025 Bulletin 2025/07**

(21) Application number: **24711958.9**

(22) Date of filing: **15.03.2024**

(51) International Patent Classification (IPC):
*H02P 25/032* (2016.01)    *H02P 29/60* (2016.01)
*B06B 1/02* (2006.01)    *H04M 19/04* (2006.01)
*G06F 3/01* (2006.01)    *H02K 33/04* (2006.01)

(86) International application number:
**PCT/KR2024/003312**

(87) International publication number:
**WO 2024/262747 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.06.2023 KR 20230081512
04.08.2023 KR 20230102497**

(71) Applicant: **Samsung Electronics Co., Ltd.
Suwon-si, Gyeonggi-do 16677 (KR)**

(72) Inventors:
• **BAE, Yudong
Suwon-si, Gyeonggi-do 16677 (KR)**
• **IM, Jonghyeok
Suwon-si, Gyeonggi-do 16677 (KR)**

(74) Representative: **Arnold & Siedsma
Bezuidenhoutseweg 57
2594 AC The Hague (NL)**

(54) **ELECTRONIC DEVICE FOR CONTROLLING VIBRATION MOTOR ON BASIS OF COMBINATION OF RESONANT FREQUENCY AND VOLTAGE, AND METHOD THEREFOR**

(57) According to an embodiment, an electronic device includes a vibration motor and a processor. The processor is configured to obtain information indicating a vibration strength of the vibration motor while transmitting an alternate current signal to the vibration motor. The processor is configured to identify a minimum voltage of the alternate current signal and a frequency of the alternate current signal at the minimum voltage while controlling the vibration motor to output vibration having a preset vibration strength based on the information from the vibration motor. The processor is configured to store a combination of the identified minimum voltage and the frequency in the memory.

FIG. 1

EP 4 507 189 A1

**Description**

**[Technical Field]**

The present disclosure relates to an electronic device for controlling a vibration motor based on a combination of a resonant frequency and a voltage and a method thereof.

**[Background Art]**

An electronic device may interact with the user by stimulating at least one of the user's five senses. For example, the electronic device may stimulate a user's tactile sense and/or auditory sense based on vibration. The electronic device may include a vibration motor that generates the vibration.

**[Disclosure]**

**[Technical Solution]**

An electronic device according to an embodiment may comprise a vibration motor and a processor. The processor may be configured to, in response to an event for outputting a vibration notification, identify a vibration level indicated by the event. The processor may be configured to identify a voltage and a resonant frequency corresponding to the vibration level based on control information for the vibration motor. The processor may be configured to transmit an alternate current signal having the identified voltage and the identified resonant frequency to the vibration motor in order to output the vibration notification based on the vibration level by using the vibration motor.

According to an embodiment, a method of an electronic device may comprise, in response to an event for outputting a vibration notification, identifying a vibration level indicated by the event. The method may comprise identifying a voltage and a resonant frequency corresponding to the vibration level based on control information for a vibration motor of the electronic device. The method may comprise transmitting an alternate current signal having the identified voltage and the identified resonant frequency to the vibration motor in order to output the vibration notification based on the vibration level by using the vibration motor.

According to an embodiment, an electronic device may include a vibration motor, memory, and a processor. The processor may be configured to, while transmitting an alternate current signal having a frequency to the vibration motor, obtain information indicating a vibration strength of the vibration motor. The information may include a relation between the vibration strength of the vibration motor and the frequency of the alternate current signal. The processor may be configured to, while controlling the vibration motor to output vibration from the vibration motor having a preset vibration strength based on the information, identify a minimum voltage of a voltage of the alternate current signal as an identified minimum voltage value (Vf0), and the frequency of the alternate current signal at the identified minimum voltage value as an identified minimum frequency value (f0). The processor may be configured to store in the memory a combination of the identified minimum frequency value (f0) and the identified minimum voltage value (Vf0).

According to an embodiment, a method of an electronic device may comprise obtaining information indicating a vibration strength of the vibration motor while transmitting an alternate current signal at a frequency to the vibration motor. The information may include a relation between the vibration strength of the vibration motor and the frequency of the alternate current signal. The method may comprise identifying the minimum voltage of the voltage of the alternate current signal as an identified minimum voltage value (Vf0), and the frequency of the alternate current signal at the identified minimum voltage value as an identified minimum frequency value (f0) while controlling the vibration motor to output vibration having a preset vibration strength based on the information from the vibration motor. The method may include storing a combination of the identified minimum voltage value (Vf0) and the identified minimum frequency value(f0) in a memory of the electronic device.

**[Description of the Drawings]**

FIG. 1 illustrates an embodiment of an electronic device that outputs a vibration notification.
FIG. 2 illustrates an example of a block diagram of an electronic device according to an embodiment.
FIG. 3 illustrates an example of a flowchart of an electronic device according to an embodiment.
FIG. 4 illustrates a graph of a resonant frequency of a vibration motor included in an electronic device according to an embodiment.
FIG. 5 illustrates an example of an operation of an electronic device related to attachment of an external object.

FIG. 6 illustrates an example of a flowchart of an electronic device according to an embodiment.

FIG. 7 illustrates an example of a block diagram of an electronic device according to an embodiment.

FIG. 8 illustrates an example of graphs for describing an operation of an electronic device identifying a resonant frequency and a voltage corresponding to the resonant frequency based on a vibration strength.

FIG. 9 illustrates an example of a relationship between a temperature and a resonant frequency identified by an electronic device according to an embodiment.

FIG. 10 illustrates an example of a relationship between weight of an electronic device and a resonant frequency, identified by the electronic device according to an embodiment.

FIG. 11 illustrates an example of a relationship between a frequency and a vibration strength identified by an electronic device according to an embodiment.

FIG. 12 illustrates an example of a flowchart of an electronic device according to an embodiment.

FIG. 13 illustrates a graph for describing an operation of an electronic device for identifying a back-electro motive force (back-EMF).

FIG. 14 illustrates an example of a flowchart of an electronic device according to an embodiment.

FIG. 15 is a block diagram of an electronic device in a network environment according to various embodiments.

**[Mode for Invention]**

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "first", "second", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

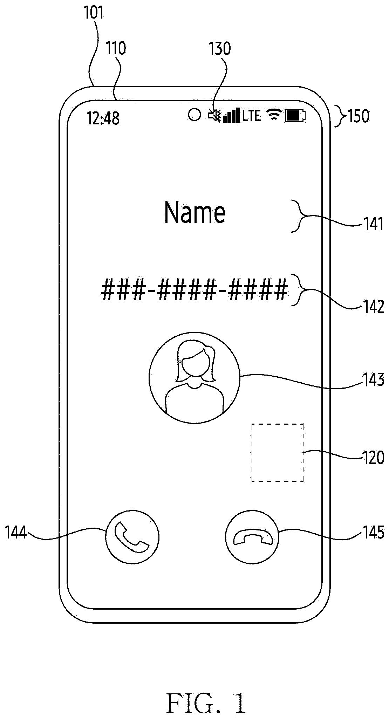

FIG. 1 illustrates an embodiment of an electronic device 101 that outputs a vibration notification. According to an embodiment, the electronic device 101 may be a terminal owned by a user. The terminal may include, for example, a personal computer (PC) such as a laptop and a desktop. The terminal may include a smartphone, a smartpad, and/or a tablet PC. The terminal may include a smart accessory such as a smartwatch and/or a head-mounted device (HMD). Referring to FIG. 1, the electronic device 101 having an exterior of a mobile phone including a display 110 is exemplarily illustrated. The embodiment is not limited thereto.

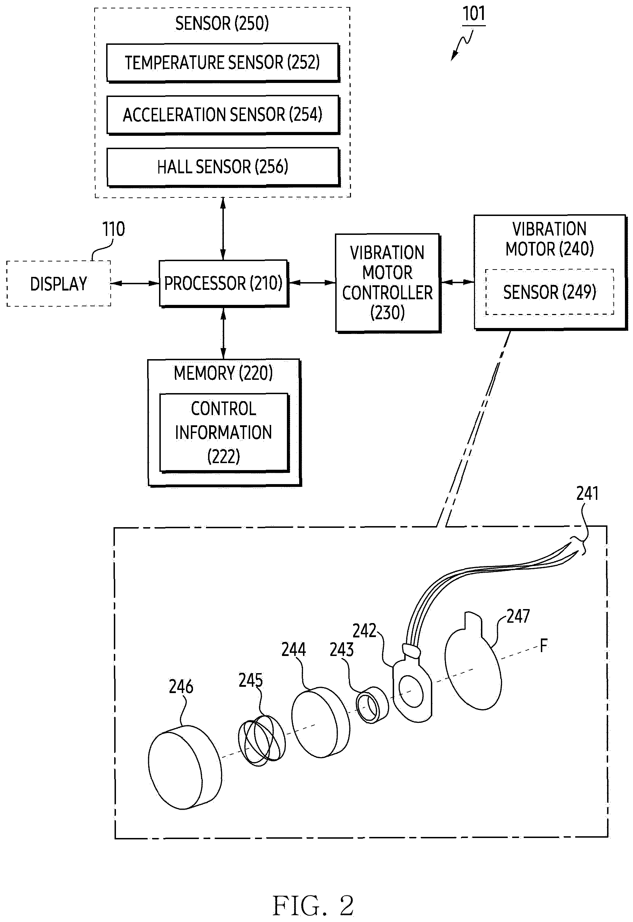

According to an embodiment, the electronic device 101 may include a vibration motor 120 for generating vibration. A location and/or a size of the vibration motor 120 illustrated in a form of a box of a dashed line of FIG. 1 is exemplary, and the embodiment is not limited thereto. The vibration motor 120 may include an actuator for generating vibration by using a repeatedly moving mass, such as an eccentric rotating mass (ERM) and/or a linear resonant actuator (LRA). The vibration motor 120 may be referred to as a linear motor, a linear actuator, a vibration actuator, an actuator, and a haptic actuator. According to an embodiment, the electronic device 101 may output vibration based on the vibration motor 120 by transmitting an alternate current signal (AC signal) having a voltage that periodically changes over time to the vibration motor 120. The alternate current signal transmitted to the vibration motor 120 to output the vibration may be referred to as a power signal of the vibration motor 120, in terms of supplying power to the vibration motor 120. An exemplary structure of a circuit included in the electronic device 101 to control the vibration motor 120 is described with reference to FIG. 2.

Referring to FIG. 1, an exemplary state of the electronic device 101 generating the vibration is illustrated. According to an embodiment, the electronic device 101 may identify an event for outputting the vibration notification. The electronic device 101 that identified the event may generate vibration by controlling the vibration motor 120 based on the vibration level indicated by the event. The event may be generated by a signal transmitted to the electronic device 101 from a network connected to the electronic device 101. For example, the electronic device 101 that received a signal for a call connection may identify an occurrence of the event. For example, electronic device 101 that received a signal including a text message may identify the occurrence of the event. For example, the electronic device 101 that received a signal for a push notification from a server (e.g., a push server) in the network may identify the occurrence of the event. The event may be generated by a software application executed by the electronic device 101. For example, the electronic device 101 may identify an event for outputting the vibration notification at a specified timing based on an alarm application. For example, the electronic device 101 may identify an event related to the vibration notification that occurred in a software application executed in the electronic device 101 based on a system process (e.g., a notification manager) executed by a framework (or an operating system). The event may be related to a mode (or a state) of the electronic device 101 related to the vibration notification. The mode may be referred to as a vibration mode, a silent mode or a mute mode, and/or a ring mode (or a ring tone mode, or a ringer mode). The embodiment is not limited thereto, and the event may be generated by a software interrupt (SWI) generated by the electronic device 101 and/or an application programming interface (API) provided by the operating system of the electronic device 101.

Referring to FIG. 1, an exemplary state of the electronic device 101 that received a signal for call establishment is illustrated. The electronic device 101 may identify the occurrence of the event for outputting the vibration notification based on the signal. Based on the signal, the electronic device 101 may determine whether to output the vibration notification. For example, in case that a current mode of the electronic device 101 corresponds to the vibration mode among the vibration mode, the silent mode, or the ring mode, the electronic device 101 may determine to output the vibration notification based on the signal. Referring to FIG. 1, in the vibration mode, the electronic device 101 may display an icon 130 indicating the vibration mode on a portion of the display 110 adjacent to one periphery of the display 110 (e.g., a periphery referred to as the top). The icon 130 may be displayed or arranged together with another icon (e.g., an icon indicating the state of charge (SOC) of the battery and/or an icon indicating sensitivity of the network connected to the electronic device 101 in a bar-shaped area (e.g., a state bar) formed along the periphery of the display 110.

Referring to FIG. 1, the electronic device 101 that received a signal for the call establishment may display a screen for guiding the call establishment on the display 110. The screen displayed through the display 110 may include a visual object indicating a counterpart to be connected by the call connection to be established by the signal. For example, the screen may include a visual object 141 indicating a name of the counterpart, a visual object 142 indicating an identifier (e.g., a phone number) assigned to the counterpart, and an image (or avatar, video) 143 corresponding to the counterpart. In the screen, the electronic device 101 may display a visual object 144 for receiving an input for the call connection and a visual object 145 for receiving an input restricting the call connection. Although the visual objects 144 and 145 having a form of a circular button are displayed, the embodiment is not limited thereto.

According to an embodiment, while displaying the screen for guiding the call establishment, the electronic device 101 may output the vibration notification for notifying the call establishment, by controlling the vibration motor 120. The electronic device 101 may turn off the user's attention before the user of the electronic device 101 recognizes the screen displayed through the display 110 by using the vibration notification. Based on an input (e.g., a mouse click on the visual object 144) indicating a selection of at least one of the visual objects 144 and 145, the electronic device 101 may stop outputting the vibration notification. For example, in response to a touch input identified on the portion of the display 110 on which visual object 144 is displayed, the electronic device 101 may establish the call connection and may stop outputting the vibration notification. The electronic device 101 that established the call connection may display another screen for controlling the call connection on the display 110.

According to an embodiment, the vibration motor 120 (e.g., LRA) included in the electronic device 101 may output vibration of a different strength (hereinafter, a vibration strength and/or a vibration force) according to the voltage and/or the frequency of the alternate current signal provided to the vibration motor 120. The vibration strength of the vibration motor 120 may be changed by at least one of the voltage, frequency, temperature of the alternate current signal transmitted to the vibration motor 120, and/or the weight (or mass) of the electronic device 101 including the vibration motor 120. Hereinafter, the resonant frequency is a frequency of an alternate current signal transmitted to the vibration motor 120, and may mean a frequency that maximizes the vibration strength of the vibration motor 120. For example, in case that other factors (e.g., the voltage of the alternate current signal, the temperature and/or the weight of the vibration motor 120 and/or the electronic device 101) related to the vibration strength except for the resonant frequency are fixed, the vibration strength of the vibration motor 120 may be maximized at the resonant frequency. Since the vibration strength of the vibration motor 120 is maximized at the resonant frequency, the vibration motor 120 may output vibration of a target vibration strength based on an alternate current signal of a relatively low voltage (and/or current) at the resonant frequency. For example, power consumption of the vibration motor 120 driven based on the resonant frequency may be lower than power consumption of the vibration motor 120 when driven at a frequency different from the resonant frequency to output the vibration of the target vibration strength. For example, power efficiency of the vibration motor 120 driven at the resonant frequency may be higher than power efficiency of the vibration motor 120 when driven at the frequency different from the resonant frequency.

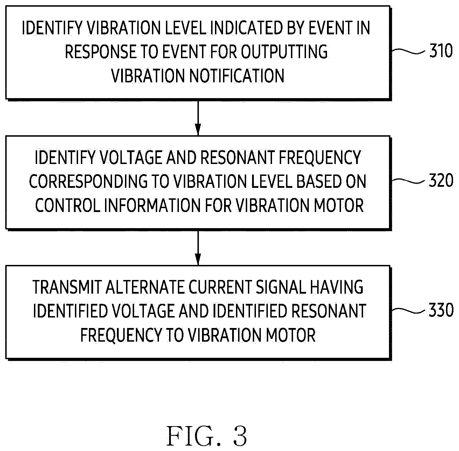

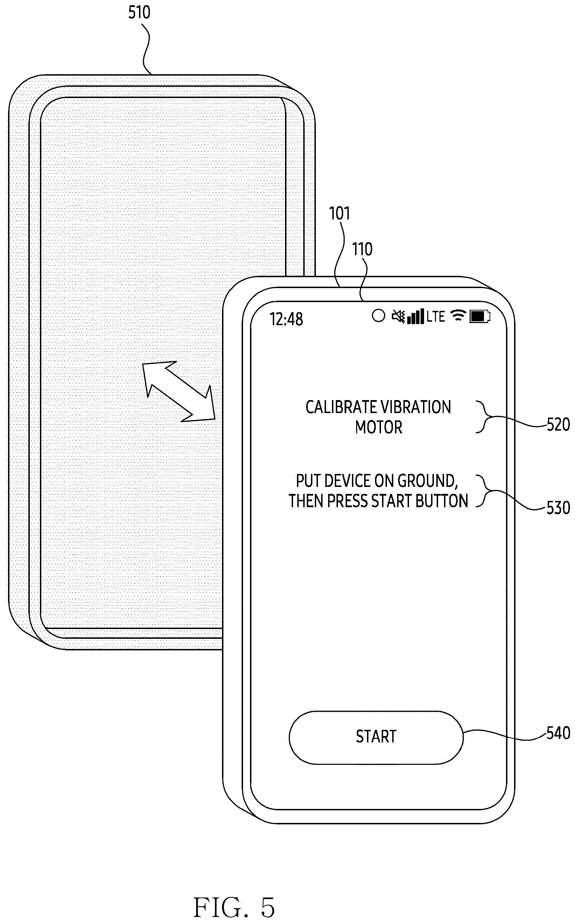

As described above, according to an embodiment, the electronic device 101 may control the vibration motor 120 based on the resonant frequency in response to the event for outputting the vibration notification. For example, the electronic device 101 may output the vibration notification based on relatively high power efficiency by transmitting an alternate current signal having the resonant frequency and a voltage required to output vibration of a specific vibration strength at the resonant frequency to the vibration motor 120. The electronic device 101 may generate the alternate current signal based on a combination (or a pair) of the resonant frequency and the voltage. An operation in which the electronic device 101 controls the vibration motor 120 based on the resonant frequency is described with reference to FIGS. 3 to 4. An operation performed by the electronic device 101 to identify the combination of the resonant frequency and the voltage according to an embodiment is described with reference to FIGS. 5 to 14. The resonant frequency of the vibration motor 120 may vary according to the voltage of the alternate current signal transmitted to the vibration motor 120. According to an embodiment, the electronic device 101 may output the vibration of the target vibration strength while reducing the power consumption of the vibration motor 120 by using a combination of a resonant frequency corresponding to a specific voltage.

FIG. 2 illustrates an example of a block diagram of an electronic device 101 according to an embodiment. The electronic device 101 of FIG. 1 may be an example of the electronic device 101 described with reference to FIG. 2. Referring to FIG. 2, according to an embodiment, the electronic device 101 may include at least one of a processor 210, memory 220, a vibration motor controller 230, a vibration motor 240, a sensor 250, or a display 110. The processor 210, the memory 220, the vibration motor controller 230, the vibration motor 240, the sensor 250, and the display 110 may be electronically and/or operably coupled with each other by an electronic element such as a communication bus. Hereinafter, hardware being operably coupled may mean that a direct connection or an indirect connection between hardware is established wired or wirelessly so that a first hardware among the hardware is controlled by a second hardware. Although illustrated based on different blocks, the embodiment is not limited thereto, and some (e.g., at least some of the processor 210 and the memory 220) of the hardware illustrated in FIG. 2 may be included in a single integrated circuit such as a system on a chip (SoC). A type and/or number of hardware included in the electronic device 101 is not limited as illustrated in FIG. 2. For example, the electronic device 101 may include only some of the hardware illustrated in FIG. 2.

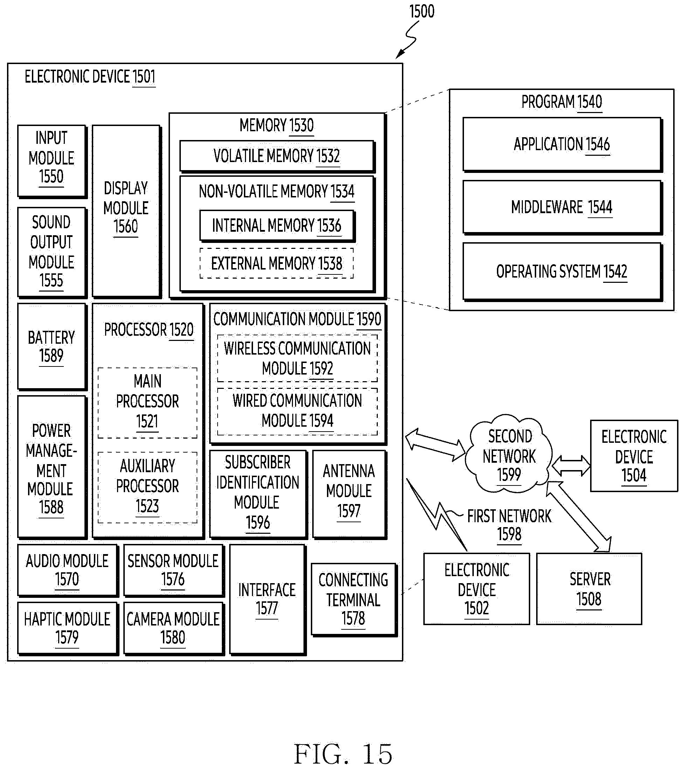

According to an embodiment, the processor 210 of the wearable device 101 may include a circuit for processing data based on one or more instructions. The circuit for processing data may include, for example, an arithmetic and logic unit (ALU), a floating point unit (FPU), a field programmable gate array (FPGA), and/or a central processing unit (CPU). The number of the processors 210 may be one or more. For example, the processor 210 may have a structure of a multi-core processor such as a dual core, a quad core, or a hexa core. The processor 210 of FIG. 2 may include a processor 1510, which will be described later with reference to FIG. 15.

According to an embodiment, the memory 220 of the wearable device 101 may include hardware for storing data and/or an instruction that are inputted and/or outputted to the processor 210. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, and embedded multi media card (eMMC). The memory 220 of FIG. 2 may include a memory 1530, which will be described later with reference to FIG. 15.

According to an embodiment, in the memory 220 of the electronic device 101, one or more instructions indicating a calculation and/or operation to be performed by the processor 210 on data may be stored in the memory 220 of the wearable device 101. A set of one or more instructions may be referred to as firmware, operating system, process, library, routine, sub-routine, and/or application. For example, the electronic device 101 and/or the processor 210 may perform at least one of operations of FIGS. 3, 6, 12, and/or 14 when a set of a plurality of instructions distributed in a form of the operating system, firmware, driver, and/or software application is executed. Hereinafter, that the application is installed in the electronic device 101 means that one or more instructions provided in a form of the application are stored in the memory 220 of the electronic device 101, and the one or more software applications are stored in an executable format (e.g., a file having an extension preset by the operating system of the electronic device 101) by the processor 210 of the electronic device 101.

Referring to FIG. 2, according to an embodiment, the electronic device 101 may include the vibration motor 240 as an output means for outputting information in a form other than a visualized form. The vibration motor 240 of FIG. 2 may include a vibration motor 120 of FIG. 1. By using the vibration motor 240, the electronic device 101 may output information in a tactile form. The embodiment is not limited thereto, and the electronic device 101 may include a speaker for outputting information in an aural form. The vibration motor 240 may be controlled by an electric signal transmitted from the processor 210. For example, the processor 210 may output the electric signal for controlling the vibration motor 240 and/or the speaker in response to a predetermined event.

Referring to FIG. 2, according to an embodiment, the electronic device 101 may include the vibration motor controller 230, which is a circuit (e.g., an integrated circuit (IC)) for driving the vibration motor 240. The vibration motor controller 230 may be referred to as a vibration motor driver IC. The vibration motor controller 230 may control the vibration motor 240 based on a command of the processor 210. For example, in case that the vibration motor controller 230 receives a command for outputting a vibration notification from the processor 210, it may transmit an alternate current signal having a resonant frequency and a voltage corresponding to the resonant frequency to the vibration motor 240.

Referring to FIG. 2, an exploded perspective view indicating a structure of the vibration motor 240 (e.g., LRA) along an axis F is illustrated. The vibration motor 240 of FIG. 2 may be an example of the vibration motor 120 of FIG. 1. The vibration motor 240 may include cables 241 for receiving the alternate current signal from the vibration motor controller 230. The vibration motor 240 may include a flexible printed circuit board (FPCB) 242 connected to the cables 241. The vibration motor 240 may include a coil 243 configured to receive the alternate current signal of the cables 241 through the FPCB. The vibration motor 240 may include a mass 244. The mass 244 may further include a magnet and/or a coil to cause movement of the mass 244 based on an electric field and/or a magnetic field formed by the coil 243 that received the alternate current signal.

In an embodiment, the mass 244 may be moved toward a first direction in which the coil 243 is located by the electric field and/or the magnetic field formed by the coil 243, or may be moved toward a second direction opposite to the first direction. The vibration motor 240 may include a spring 245 connected to the mass 244. Based on the spring 245, the mass 244 may be moved along the exemplary folding axis F of the vibration motor 240. The vibration motor 240 may include a motor cover 246 and/or a motor chassis 247 configuring a housing of the vibration motor 240. In the vibration motor 240 including the spring 245, the mass 244, and the coil 243 assembled along the axis F extending in one direction, the mass 244 may be repeatedly moved on the axis F extending in the one direction. For example, since the mass 244 in the vibration motor 240 is repeatedly moved on the axis F extending in the one direction, the vibration motor 240 may generate vibration along the direction of the axis F.

In an embodiment, a vibration strength of the vibration motor 240 may correspond to magnitude of motion of the mass 244 in the vibration motor 240. The mass 244 may move differently according to temperature, spring constant of the spring 245 connected to the mass 244, weight of the mass 244, the vibration motor 240, and/or the electronic device 101, and the location of the vibration motor 240 in the electronic device 101. At the resonant frequency, since the voltage of the alternate current signal inputted to the vibration motor 240 is reduced and the vibration strength of the vibration motor 240 is increased, the electronic device 101 may control the vibration motor 240 based on the resonant frequency. Since the resonant frequency is changed by the above-described factors (e.g., the voltage of the alternate current signal, the temperature, and/or the weight of the electronic device 101), the electronic device 101 may control the vibration motor 240 by using the resonant frequency and the voltage optimized based on the factors.

According to an embodiment, the sensor 250 of the electronic device 101 may generate electronic information that may be processed by the processor 210 and/or the memory 220 from non-electronic information related to the electronic device 101. The electronic information generated by the sensor 250 may be stored in the memory 220, may be processed by the processor 210, or may be transmitted to another electronic device distinct from the electronic device 101. Referring to FIG. 2, the electronic device 101 may include the sensor 250 configured to generate sensor data to be transmitted to the processor 210. The embodiment is not limited thereto, and a sensor 249 may be included in the vibration motor 240.

Referring to FIG. 2, an example of the sensor 250 included in the electronic device 101 may include a temperature sensor 252, an acceleration sensor 254, and/or a hall sensor 256. The embodiment is not limited thereto, and the electronic device 101 may further include a sensor (e.g., a proximity sensor, a grip sensor, and/or a cover sensor) for detecting an accessory (e.g., a case) attached to the electronic device 101. According to an embodiment, the sensor 250 may include an integrated circuit (e.g., a sensor hub, a sensor IC, and/or a sensor controller) for processing sensor data outputted from the temperature sensor 252, the acceleration sensor 254, the hall sensor 256, or at least one. The temperature sensor 252 may output sensor data indicating a portion of the electronic device 101 and/or a temperature of an external space including the electronic device 101. The sensor data of the temperature sensor 252 may include a numerical value indicating the temperature based on Celsius and/or Fahrenheit. The acceleration sensor 254 may output sensor data indicating the direction and/or magnitude of the acceleration (e.g., gravity acceleration) applied to the electronic device 101 by using a plurality of preset axes (e.g., x-axis, y-axis, z-axis) perpendicular to each other. The hall sensor 256 may include a magnet and a magnetic field sensor that measures a change in a magnetic field formed by the magnet. The magnet and the magnetic field sensor may be disposed in different portions of hardware (e.g., the electronic device 101 and/or the vibration motor 240) related to the hall sensor 256. Based on a strength of the magnetic field formed by the magnet indicated by the magnetic field sensor of the hall sensor 256, the electronic device 101 may identify a distance between the magnetic field sensor and the magnet.

In an embodiment, the acceleration sensor 254 and/or the hall sensor 256 may be included in the sensor 249 associated with the vibration motor 240. For example, to identify the motion of the mass 244 of the vibration motor 240, the acceleration sensor 254 may be disposed on the mass 244. For example, in order to identify the motion of the mass 244 of the vibration motor 240, the magnet of the hall sensor 256 may be disposed on the mass 244 and may be disposed on another portion of the vibration motor 240 (e.g., the motor chassis 247) adjacent to the mass 244. By using the sensor data of the sensors 249 and 250, the processor 210 and/or the vibration motor controller 230 of the electronic device 101 may identify the vibration strength of the vibration motor 240. In order to identify the vibration strength, the processor 210 may communicate with the sensor 249 included in the vibration motor 240, or may communicate with the sensor 250 disposed in the electronic device 101 independent of the vibration motor 240. The vibration strength may include the acceleration of the mass 244, identified by the acceleration sensor 254. The embodiment is not limited thereto. In an embodiment that includes the vibration motor 240 that does not include a separate sensor, the processor 210 may identify the vibration strength of the vibration motor 240 based on the voltage and/or a current inputted to the vibration motor 240. The processor 210 may identify the vibration strength of the vibration motor 240 by measuring a back-electro motive force (back-EMF) voltage of the vibration motor 240.

According to an embodiment, the display 110 of the electronic device 101 may output visualized information (e.g., at least one of screens of FIG. 1 and/or FIG. 5) to the user. The display 110 may include a liquid crystal display (LCD), a plasma display panel (PDP), and/or one or more light emitting diodes (LEDs). The LED may include an organic LED (OLED). The display 110 may include a flat panel display (FPD) and/or an electronic paper. The embodiment is not limited thereto, and the display 110 may have an at least partially curved shape or a deformable shape.

The display 110 of the electronic device 101 according to an embodiment may include a sensor (e.g., a touch sensor panel (TSP) for detecting an external object (e.g., a user's finger) on the display 110. For example, based on the TSP, the processor 210 of the electronic device 101 may detect the external object that contacts the display 110 or floats on the display 110. In response to detecting the external object, the electronic device 101 may execute a function related to a specific visual object corresponding to a location of the external object on the display 110 among the visual objects that is being displayed in the display 110.

According to an embodiment, the processor 210 of the electronic device 101 may identify a vibration level indicated by the event in response to the event for outputting the vibration notification. The vibration level may be set by a parameter (e.g., strength, intensity, rate, degree, amplitude, and/or magnitude) included in an API (e.g., vibrator and/or vibrationeffect) called for output of the vibration notification. Based on a numerical value such as an integer and/or a natural number included in the parameter, the processor 210 may identify the vibration level. For example, the vibration level may be identified among a plurality of preset vibration levels distinguished by each of natural numbers 1 to 5.

According to an embodiment, the electronic device 101 may identify the voltage and the resonant frequency corresponding to the vibration level based on control information 222 for the vibration motor 240. Referring to FIG. 2, the processor 210 may obtain the control information 222 from the memory 220 of the electronic device 101. The control information 222 may include a look-up table including combinations of the voltage and the resonant frequency corresponding to one or more vibration levels. The control information 222 may be stored in an area (e.g., elastic file system, EFS) set for the vibration motor controller 230 and/or the vibration motor 240 in a Universal Flash Storge (UFS) included in the memory 220. In the area, a software application (e.g., firmware) executed by the vibration motor controller 230 for driving the vibration motor 240 may be stored. The control information 222 may be included in the software application to be loaded to the vibration motor controller 230. The software application may be inputted to the vibration motor controller 230 by the processor 210 while the electronic device 101 is booting.

According to an embodiment, the processor 210 of the electronic device 101 may identify the combination of the voltage and the resonant frequency to be used for control of the vibration motor 240 based on relationship between the vibration level, voltage, and resonant frequency indicated by the control information 222. According to an embodiment, the processor 210 of the electronic device 101 may transmit an alternate current signal having the identified voltage and the identified resonant frequency to the vibration motor 240 in order to output a vibration notification based on the vibration level by using the vibration motor 240. For example, the processor 210 may control the vibration motor controller 230 so that the alternate current signal is transmitted to the vibration motor 240. By using the alternate current signal, the electronic device 101 and/or the processor 210 may control the vibration motor 240 based on the resonant frequency. Since the vibration motor 240 is controlled based on the resonant frequency, the processor 210 may output the vibration having the vibration level required by the event based on relatively low power consumption and/or relatively low voltage.

FIG. 3 illustrates an example of a flowchart of an electronic device according to an embodiment. An electronic device 101 of FIGS. 1 to 2, a processor 210 of FIG. 2, and/or a vibration motor controller 230 of FIG. 2 may perform an operation described with reference to FIG. 3.

Referring to FIG. 3, in operation 310, according to an embodiment, a processor of an electronic device may identify a vibration level indicated by the event in response to the event for outputting a vibration notification. The event may be identified based on receiving a signal for call establishment through a communication circuit of the electronic device. The event may be identified by calling of an API for an occurrence of the vibration notification. The event may be occurred by a software application executed by the processor. For example, based on the API called by the software application and parameters required by the API, the processor may identify the event and the vibration level.

Referring to FIG. 3, in operation 320, according to an embodiment, the processor of the electronic device may identify a voltage and a resonant frequency corresponding to the vibration level based on control information (e.g., control information 222 of FIG. 2) for a vibration motor (e.g., a vibration motor 120 of FIG. 1 and/or a vibration motor 240 of FIG. 2). The processor may identify the resonant frequency and the voltage stored in the memory to control the vibration motor based on resonance of the vibration motor while the electronic device is booting. For example, the control information stored in the memory may be loaded into the processor, memory (e.g., memory 220 of FIG. 2), and/or a vibration motor controller (e.g., a register of the vibration motor controller) of the electronic device while the electronic device is booting.

**EP 4 507 189 A1**

In an embodiment, the control information stored in the memory may include a combination of a voltage and a resonant frequency related to at least one vibration level among a plurality of preset vibration levels. In an embodiment, the control information may include a combination of a voltage and a resonant frequency corresponding to a maximum vibration level among the plurality of preset vibration levels. The maximum vibration level may correspond to a maximum value of a vibration strength supported by the electronic device. In case that an event related to call establishment described above with reference to FIG. 1 occurs, the processor may control the vibration motor based on the maximum vibration level.

In an embodiment, the processor that identified the control information including the combination of the voltage and the resonant frequency corresponding to the maximum vibration level among the plurality of preset vibration levels may determine a voltage and/or a resonant frequency of the alternate current signal to be transmitted to the vibration motor by adjusting the voltage and/or the resonant frequency based on an event for outputting a vibration notification of a vibration level different from the maximum vibration level. For example, in case that a voltage corresponding to level 5, which is the maximum vibration level included in the control information, is Vf0, the processor may determine a voltage corresponding to a vibration level of level 4 as $0.8 \times Vf0$. In the above example, the processor may determine a voltage corresponding to a vibration level of level 3 as $0.6 \times Vf0$. In the above example, the processor may change a voltage of an alternate current signal to be transmitted to the vibration motor by adjusting a coefficient applied to Vf0 according to the level. For example, the processor may determine a voltage corresponding to a vibration level of level 1 as $0.2 \times Vf0$. In the above example, the control information identified by the processor may include a combination of the voltage Vf0 corresponding to level 5, the applied coefficients, and the vibration level. The embodiments are not limited thereto.

In an embodiment, the control information may include a combination of a voltage and a resonant frequency corresponding to each of the plurality of preset vibration levels. For example, for an integer i indicating the vibration level identified by the event, the control information stored in the memory may include a combination of a voltage and a resonant frequency grouped by the integer i (Vf0_i, f0_i). For example, Vf0_i may indicate a voltage to be used at the vibration level of level i, and f0_i may indicate a resonant frequency to be used at the vibration level of level i. According to an embodiment, the processor of the electronic device may determine a voltage and a resonant frequency of an alternate current signal to be provided to the vibration motor by searching the combinations (Vf0_i, f0_i) stored in the control information, based on the vibration level identified based on operation 310.

Referring to FIG. 3, in operation 330, according to an embodiment, the processor of the electronic device may transmit an alternate current signal having a voltage identified by operation 320 and a resonant frequency identified by operation 320 to the vibration motor. The processor may output the vibration notification by using vibration generated by the vibration motor that received the alternate current signal.

For example, based on the control information including the combination of the voltage and the resonant frequency corresponding to the maximum vibration level, the processor may transmit an alternate current signal having the voltage and the resonant frequency indicated by the control information to the vibration motor.

For example, in case that an event for outputting the vibration notification at another vibration level different from the maximum vibration level is identified, the processor may transmit another alternate current signal having a different voltage less than the voltage to the vibration motor.

For example, based on control information including combinations of voltages and resonant frequencies corresponding to each of the different vibration levels, the processor may identify a combination of a voltage and a resonant frequency corresponding to a vibration level corresponding to the event. The processor may transmit an alternate current signal based on the identified combination to the vibration motor. Since the vibration motor operates by the resonant frequency based on the operation 330, power consumed by the vibration motor may be reduced, and power efficiency of the vibration motor may be improved.

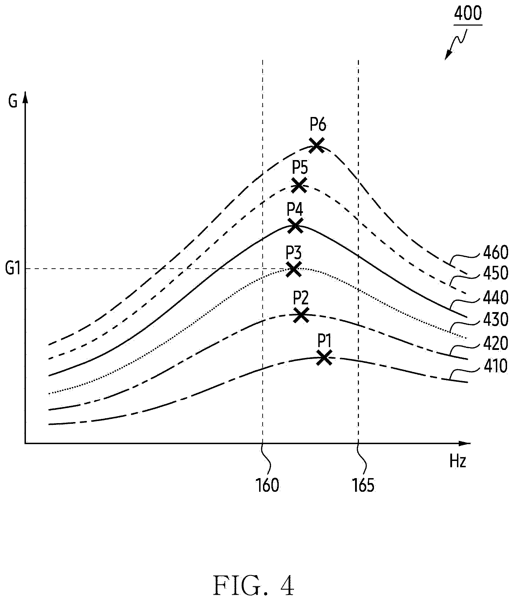

FIG. 4 illustrates a graph 400 of a resonant frequency of a vibration motor included in an electronic device according to an embodiment. An electronic device 101 of FIGS. 1 and 2 may include the electronic device of FIG. 4. The vibration motor of FIG. 4 may be an example of a vibration motor 120 of FIG. 1.

The graph 400 of FIG. 4 illustrates a relationship between a frequency and a vibration strength of the vibration motor at different driving voltages. Hereinafter, the driving voltage of the vibration motor may mean a root mean square (RMS) of a voltage of the alternate current signal inputted to the vibration motor. An x-axis of the graph 400 may correspond to a frequency of an alternate current signal inputted to a vibration motor based on a unit of Hz, and a y-axis of the graph 400 may correspond to a vibration strength of the vibration motor based on a unit of G (e.g., $m/s^2$). Each of different lines 410, 420, 430, 440, 450, and 460 of the graph 400 may indicate a relationship between the frequency and the vibration strength at each of driving voltages of 0.5 Vrms, 0.7 Vrms, 0.9 Vrms, 1.1 Vrms, 1.3 Vrms, and 1.5 Vrms.

Referring to FIG. 4, in a frequency range between 160 Hz and 165 Hz, the resonant frequency of the vibration motor may be changed according to the driving voltage. A point p1 on a line 410 may indicate a resonant frequency that causes vibration of maximum vibration strength to be outputted while transmitting an alternate current signal having the driving voltage (e.g., 0.5 Vrms) corresponding to the line 410 to the vibration motor. Similarly, points p2, p3, p4, p5, and p6 on lines 420, 430, 440, 450, and 460 may indicate resonant frequencies that causes the vibration of the maximum vibration strength to be outputted while transmitting an alternate current signal having driving voltages corresponding to each of the lines 420, 430, 440, 450, and 460 to the vibration motor. Referring to the resonant frequencies indicated by the points p1, p2, p3, p4, p5, and p6 of FIG. 4, the resonant frequency of the vibration motor may be changed according to the driving voltage.

According to an embodiment, in case that the electronic device includes the vibration motor having a relationship between the driving voltage, the vibration strength, and the resonant frequency indicated by the graph 400, the electronic device may identify a driving voltage corresponding to a specific resonant frequency based on control information on the vibration motor. For example, in response to an event for outputting a vibration notification based on a vibration strength of G1, the electronic device may transmit an alternate current signal having a driving voltage (e.g., 0.9 Vrms) and a resonant frequency corresponding to the point p3 having the vibration strength of G1 among the points p1, p2, p3, p4, p5, and p6 corresponding to the resonant frequencies, to the vibration motor. Since the vibration motor operates in the resonant frequency, the electronic device may control the vibration motor by using a relatively low driving voltage. Since the driving voltage used for controlling the vibration motor is reduced, power consumption of the vibration motor may be reduced.

According to an embodiment, the electronic device may identify combinations of one or more resonant frequencies and one or more voltages to control the vibration motor based on the resonant frequency. Hereinafter, an example of an operation of identifying the one or more combinations by the electronic device according to an embodiment will be described with reference to FIGS. 5 to 14.

FIG. 5 illustrates an example of an operation of an electronic device 101 related to attachment of an external object. The electronic device 101 of FIGS. 1 and 2 may perform the operation of the electronic device 101 described with reference to FIG. 5.

Referring to FIG. 5, an exemplary state of the electronic device 101 displaying a screen for calibration of a vibration motor (e.g., a vibration motor 120 of FIG. 1 and/or a vibration motor 240 of FIG. 2) is illustrated. The calibration of the vibration motor may mean at least partially changing control information (e.g., control information 222 of FIG. 2) on the vibration motor. For example, based on the calibration of the vibration motor, the electronic device 101 may change a voltage included in the control information and/or a resonant frequency corresponding to the voltage. For example, based on the calibration of the vibration motor, the electronic device 101 may add the combination of the voltage and the resonant frequency to the control information, and/or may remove the combination of the voltage and the resonant frequency stored in the control information. The calibration of the vibration motor may be included in a manufacturing operation of the electronic device 101 and/or in a self-diagnosis operation by a user of the electronic device 101.

Referring to FIG. 5, a case 510 having a form that is attachable to the electronic device 101 is illustrated. In case that the user attaches the case 510 to the electronic device 101, the electronic device 101 may identify the case 510 attached to the electronic device 101 by using a sensor (e.g., a hall sensor 256 of FIG. 2). For example, the electronic device 101 may identify the case 510 attached to the electronic device 101 based on a magnet included in the case 510 by using a hall sensor. In an embodiment, the electronic device 101 may identify the case 510 attached to the electronic device 101 by using a proximity sensor and/or a grip sensor. In an embodiment, the electronic device 101 may identify the case 510 attached to the electronic device 101 based on a wireless communication protocol such as near field communication (NFC), bluetooth low energy (BLE), Bluetooth, and/or WiFi direct. In an embodiment, the electronic device 101 may identify the case 510 attached to the electronic device 101 based on a pogo pin disposed on one surface of a housing of the electronic device 101.

In an embodiment, the electronic device 101 that identified an external object (e.g., the case 510) based on one or more sensors may display a screen for the calibration of the vibration motor on a display 110. Referring to FIG. 5, the screen may include preset text guiding the calibration of the vibration motor. For example, the electronic device 101 may display a visual object 520 including text such as "Calibrate the vibration motor.", on the display 110. The electronic device 101 may display, on the display 110, preset text guiding a posture of the electronic device 101 recommended for the calibration of the vibration motor. For example, the electronic device 101 may display a visual object 530 including text such as "put the device on the ground, then press the start button.", on the display 110. The posture of the electronic device 101 guided by the visual object 530 may be required to measure a vibration strength. The posture may include a posture in which the electronic device 101 is located on the ground, in which a rear surface of the electronic device 101 faces the ground.

According to an embodiment, the electronic device 101 may display a visual object 540 for receiving an input indicating initiation of the calibration in a screen displayed on the display 110 for the calibration of the vibration motor. Although the visual object 540 having a form of the button is illustrated as an example, the embodiment is not limited thereto. In response to an input indicating selection of the visual object 540, the electronic device 101 may initiate the calibration of the vibration motor. For example, the electronic device 101 may change control information stored in memory based on a vibration motor controlled to output a preset vibration strength. For example, while maintaining the vibration strength outputted from the vibration motor at a preset vibration strength, the electronic device 101 may identify a resonant frequency that minimizes a voltage of an alternate current signal transmitted to the vibration motor. The electronic device 101 may change the control information stored in the memory based on the identified combination of the resonant frequency and the voltage.

Referring to FIG. 5, the operation of the electronic device 101 for displaying the screen for the calibration of the vibration motor based on identifying attachment and/or detach of the case 510 is illustrated, but the embodiment is not limited thereto. The electronic device 101 may display the screen illustrated in FIG. 5 based on at least one of the timing at which a temperature and/or the control information identified by the electronic device 101 is changed. For example, the electronic device 101 that identified a temperature different from a preset temperature range may display the screen of FIG. 5. For example, after a preset period for calibration has elapsed after the timing at which the control information was changed, the electronic device 101 may display the screen of FIG. 5. In an embodiment, the electronic device 101 may display the screen of FIG. 5 based on a user input.

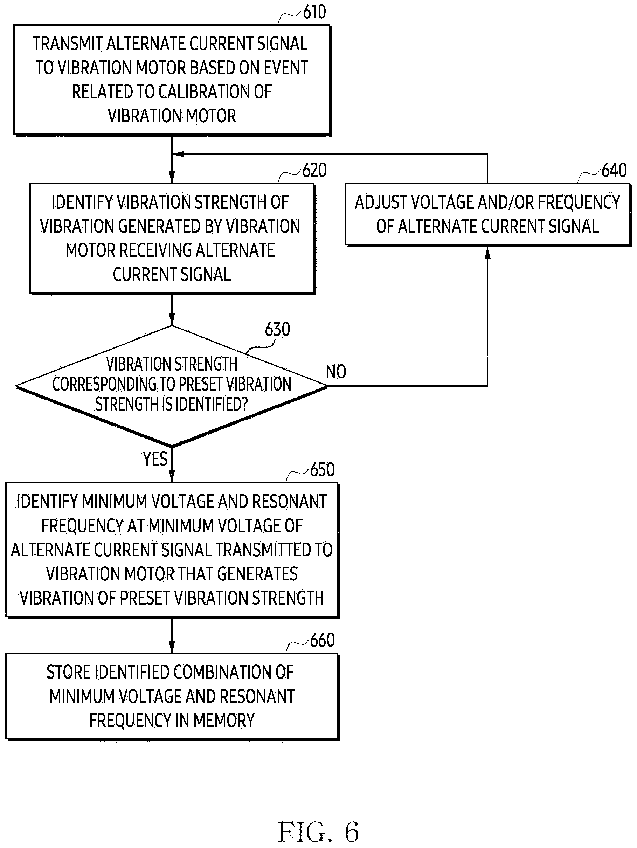

Hereinafter, an operation of the electronic device 101 for changing the control information on the vibration motor will be described with reference to FIGS. 6 to 7.

FIG. 6 illustrates an example of a flowchart of an electronic device according to an embodiment. An electronic device 101 of FIGS. 1 to 2, a processor 210 of FIG. 2, and/or a vibration motor controller 230 of FIG. 2 may perform an operation described with reference to FIG. 6.

Referring to FIG. 6, in operation 610, according to an embodiment, a processor of the electronic device may transmit an alternate current signal to a vibration motor based on an event related to calibration of the vibration motor (e.g., a vibration motor 120 of FIG. 1 and/or a vibration motor 240 of FIG. 2). The event may be generated by an input indicating selection of a visual object 540 of FIG. 5. The processor may perform operation 610 based on a condition for performing the calibration. For example, the processor may perform operation 610 based on identifying a posture (e.g., a posture of the electronic device put on ground) of the electronic device. While performing operation 610, the processor may display a message (e.g., "don't touch the electronic device") for preventing a user's action (e.g., an action of grabbing the electronic device) that interferes with identifying a vibration strength, through a display (e.g., a display 110 of FIGS. 1 and/or 5).

In an embodiment, the processor may transmit an alternate current signal to the vibration motor based on a preset voltage range and a preset frequency range. The preset voltage range may have an upper limit and a lower limit based on a rated voltage of the vibration motor. For example, while performing calibration of the vibration motor, the voltage of the alternate current signal transmitted to the vibration motor may be changed in the preset voltage range.

Referring to FIG. 6, in operation 620, according to an embodiment, the processor of the electronic device may identify a vibration strength of vibration generated by the vibration motor receiving the alternate current signal. For example, the processor may identify the vibration strength of operation 620 based on sensor data of at least one of an acceleration sensor or a hall sensor associated with a mass (e.g., a mass 244 of FIG. 2) included in the vibration motor. For example, the processor may identify the vibration strength of operation 620 based on sensor data of a sensor (e.g., a sensor 250 in FIG. 2) included in the electronic device. For example, the processor may identify the vibration strength of operation 620 by using a relationship between the voltage and current of the alternate current signal transmitted to the vibration motor. The processor may identify the vibration strength of operation 620 based on an impedance of the vibration motor indicated by the voltage and the current.

In an embodiment, the processor may identify the vibration strength of operation 620 based on a back-electro motive force (back-EMF) of the vibration motor. For example, for the back-electro motive force (back-EMF) Bemf, the processor may obtain a vibration strength Sa' by applying a proportional constant to the back-electro motive force (back-EMF) Bemf (Sa' = $\alpha \times$ Bemf). The $\alpha$ may indicate the proportional constant between the back-electro motive force (back-EMF) and the vibration strength. Similarly, the processor may identify the vibration strength of operation 620 by applying the proportional constant to a numerical value identified from the acceleration sensor and/or the hall sensor.

Referring to FIG. 6, in operation 630, according to an embodiment, the processor of the electronic device may obtain whether a vibration strength corresponding to the preset vibration strength is identified based on operation 620. In case that a vibration strength having a difference between the preset vibration strength and a threshold is identified, or in case that a vibration strength different from the preset vibration strength is identified (630-No), the processor may perform operation 640. In case that a vibration strength having a difference greater than or equal to the preset vibration strength is identified, or in case that a vibration strength corresponding to the specified vibration strength is identified (630-Yes), the processor may perform operation 650.

Referring to FIG. 6, in operation 640, according to an embodiment, the processor of the electronic device may adjust the voltage and/or the frequency of the alternate current signal. The processor may change the voltage of the alternate current signal in the preset voltage range. The processor may change the frequency of the alternate current signal in the preset frequency range. The processor may adjust the voltage and/or the frequency of the alternate current signal so that a vibration strength of vibration generated by the vibration motor matches the preset vibration strength of operation 630. Referring to FIG. 6, the processor that adjusted the voltage and/or the frequency of the alternate current signal transmitted to the vibration motor based on operation 640 may perform operations 620 and 630. For example, based on operations 640, 620, and 630, the processor may change the vibration strength of the vibration motor to the preset vibration strength of operation 630.

For example, the processor may compare a vibration strength Sa' identified based on operation 620 and the preset vibration strength S_target of operation 630. In case that the vibration strength Sa' is less than the preset vibration strength S_target (Sa' < S_target), the processor may increase a driving voltage. For example, the processor may increase the driving voltage by $\Delta Vf = \beta \times (Sa' - S\_target)$. The $\beta$ may be a correlation coefficient between the driving voltage and vibration strength. In case that the vibration strength Sa' exceeds the preset vibration strength S_target (Sa' > S_target), the processor may reduce the driving voltage. For example, the processor may reduce the driving voltage by $\Delta Vf$. In case that the increased or/and decreased driving voltage by $\Delta Vf$ exceeds the preset voltage range, the processor may change the driving voltage based on the upper limit and/or the lower limit of the preset voltage range.

Referring to FIG. 6, in operation 650, according to an embodiment, the processor of the electronic device may identify a minimum voltage and a resonant frequency at the minimum voltage of an alternate current signal transmitted to the vibration motor that generates vibration of the preset vibration strength. While the vibration strength of the vibration motor maintains the preset vibration strength, the processor may identify a frequency of the alternate current signal that minimizes the voltage of the alternate current signal. The processor may identify the minimum voltage and the resonant frequency of operation 650 by repeatedly changing the voltage and/or the frequency of the alternate current signal. For example, based on a sweep for the preset voltage range and the preset frequency range, the processor may identify a combination of the minimum voltage and the resonant frequency of operation 650.

Referring to FIG. 6, in operation 660, according to an embodiment, the processor of the electronic device may store the combination of the minimum voltage and the resonant frequency identified based on operation 650, in memory (e.g., memory 220 of FIG. 2). The processor that performed operation 660 may terminate the calibration of the vibration motor. After the calibration, the minimum voltage and the resonant frequency of operation 650 may be stored in an EFS area of the memory. After the calibration, the processor may store the combination of the minimum voltage and the resonant frequency identified by operation 650 in a register of the vibration motor controller (e.g., the vibration motor controller 230 of FIG. 2). The minimum voltage and the resonant frequency stored in the register may be used to output a vibration notification. After the calibration, after the electronic device is booting, the processor may input the minimum voltage and the resonant frequency stored in the EFS area of the memory into the register of the vibration motor controller. For example, after storing the combination of the minimum voltage and the resonant frequency based on operation 660, the processor that identified the event for the output of the vibration notification may transmit the alternate current signal having the minimum voltage and the resonant frequency included in the combination to the vibration motor.

As described above, according to an embodiment, the processor of the electronic device may obtain information indicating the vibration strength of the vibration motor while transmitting the alternate current signal to the vibration motor. Based on the information, the processor may identify the minimum voltage of the voltage of the alternate current signal and the frequency of the alternate current signal at the minimum voltage while controlling the vibration motor so that vibration having the preset vibration strength is outputted from the vibration motor. The processor may store a combination of the identified minimum voltage and the frequency in the memory. Based on the combination, the processor may obtain a driving voltage for controlling the vibration motor to generate vibration greater than or equal to the preset vibration strength and a resonant frequency at the driving voltage. By driving the vibration motor based on the resonant frequency, the processor may increase power efficiency of the vibration motor and may stably control the vibration motor.

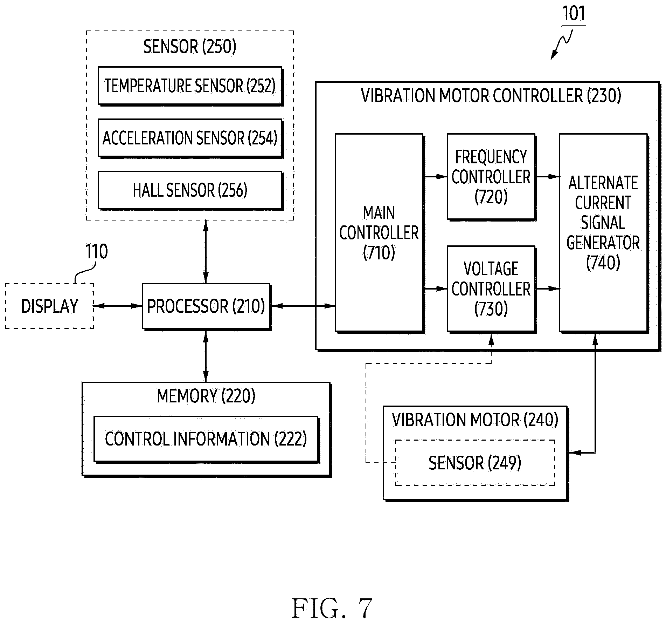

FIG. 7 illustrates an example of a block diagram of an electronic device 101 according to an embodiment. The electronic device 101 of FIG. 7 may be an example of the electronic device 101 described with reference to FIGS. 1 to 2.

According to an embodiment, the electronic device 101 may determine whether to change control information 222 related to a vibration motor 240 based on sensor data of the sensor 250. For example, in case that an external object (e.g., a case 510 of FIG. 5) attached to the electronic device 101 is identified based on a hall sensor 256, the electronic device 101 may perform an operation to change the control information 222 based on calibration of the vibration motor 240. For example, in case that the electronic device 101 separated from the external object is identified based on the hall sensor 256, the electronic device 101 may perform an operation for changing the control information 222 based on the calibration of the vibration motor 240. While performing calibration on the vibration motor 240, the electronic device 101 may identify whether to change a voltage and a resonant frequency obtained by the calibration, based on a temperature sensor 252.

Referring to FIG. 7, an exemplary structure of a vibration motor controller 230 included in the electronic device 101 is illustrated. The vibration motor controller 230 may include a main controller 710 configured to receive a command (e.g., a command for initiating calibration) from a processor 210. The vibration motor controller 230 may include a frequency controller 720 that is a circuit for controlling a frequency of an alternate current signal to be transmitted to the vibration motor 240 and a voltage controller 730 that is a circuit for controlling a voltage of the alternate current signal. The vibration motor controller 230 may include an alternate current signal generator 740, which is a circuit for generating an alternate current signal having a frequency and a voltage adjusted by the frequency controller 720 and the voltage controller 730.

According to an embodiment, the electronic device 101 may adjust (or sweep) the frequency of the alternate current signal transmitted to the vibration motor 240 in a preset frequency range based on the frequency controller 720. The preset frequency range may be referred to as a frequency control area. According to an embodiment, the electronic device 101 may adjust (or sweep) the voltage of the alternate current signal transmitted to the vibration motor 240 in a preset voltage range based on the voltage controller 730. The preset voltage range may be referred to as a voltage control area. While the frequency of the alternate current signal is adjusted in the preset frequency range, the processor may adjust the voltage of the alternate current signal in the preset voltage range based on the vibration strength of the vibration motor 240.

According to an embodiment, the electronic device 101 may include a sensor 249 for measuring the vibration strength of the vibration motor 240. The sensor 249 may include an acceleration sensor and/or a hall sensor for identifying a motion of the vibration motor 240. Although the sensor 249 is illustrated as being included in the vibration motor 240, the embodiment is not limited thereto. For example, the sensor 249 may be spaced apart from the vibration motor 240. For example, the vibration motor controller 230 may identify the vibration strength without the sensor 249. In order to identify the vibration strength independently of the sensor 249, the vibration motor controller 230 may include a circuit for measuring a voltage and a current of the alternate current signal inputted to the vibration motor 240. Based on an impedance and/or a back-electro motive force (back-EMF) of the vibration motor 240, calculated from the voltage and the current, the vibration motor controller 230 and/or the processor 210 may identify a resonant frequency and a driving voltage at the resonant frequency.

Referring to FIG. 7, sensor data of the sensor 249 of the vibration motor 240 may be transmitted to the voltage controller 730 of the vibration motor controller 230. The embodiment is not limited thereto, and the sensor data may be transmitted to the main controller 710 of the vibration motor controller 230. The main controller 710 that received the sensor data may adjust a strength of the voltage of the alternate current signal transmitted to the vibration motor 240 by controlling the voltage controller 730. The voltage controller 730 may adjust the voltage of the alternate current signal based on the vibration strength indicated by the sensor data. For example, the voltage controller 730 may gradually reduce or may gradually increase the voltage, while the vibration strength maintains a preset vibration strength, in the preset voltage range.

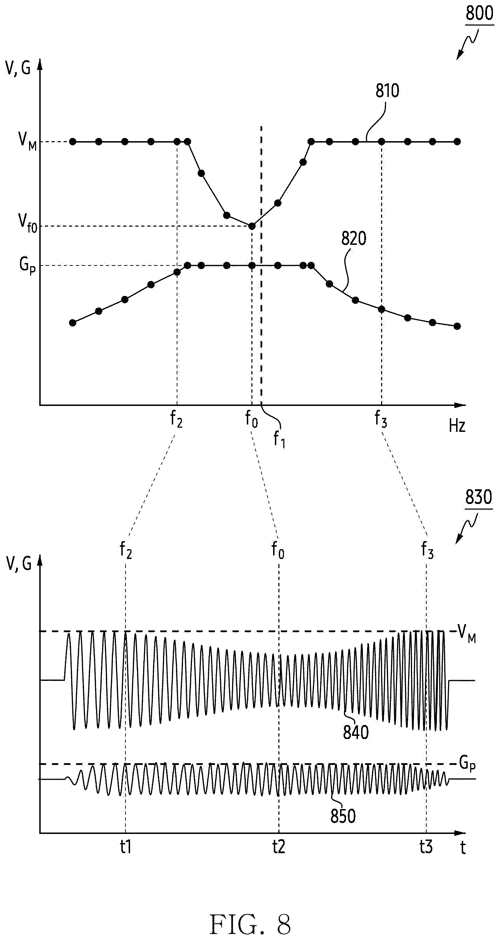

Hereinafter, an example of an operation in which the electronic device 101 changes the control information 222 of the vibration motor 240 based on exemplary graphs of the vibration strength, voltage, and frequency identified by the electronic device 101 while performing the calibration of the vibration motor 240 will be described with reference to FIG. 8.

FIG. 8 illustrates an example of graphs 800 and 830 for describing an operation of an electronic device identifying a resonant frequency and a voltage corresponding to the resonant frequency based on a vibration strength. An electronic device 101 of FIGS. 1 to 2, a processor 210 of FIG. 2, and/or a vibration motor controller 230 of FIGS. 2 and 7 may perform an operation described with reference to FIG. 8.

The graph 800 of FIG. 8 indicates a relationship between a driving voltage, a vibration strength, and a frequency of a vibration motor (e.g., a vibration motor 240 of FIGS. 2 and/or 7). A graph 830 of FIG. 8 indicates the driving voltage inputted to the vibration motor while the electronic device controls the vibration motor based on the specified vibration strength. According to an embodiment, a processor and/or a vibration motor controller of the electronic device may identify a minimum value of a voltage of an alternate current signal transmitted to the vibration motor while the vibration motor is controlled to output vibration of a preset vibration strength. The electronic device may change a voltage of control information based on the identified minimum value.

In the graph 800 of FIG. 8, a line 810 indicates the driving voltage of the vibration motor. A line 820 indicates the vibration strength of the vibration motor. An x-axis of the graph 800 indicates the frequency of the alternate current signal inputted to the vibration motor. A y-axis of the graph 800 indicates the voltage of the driving voltage and the vibration strength. In the graph 830 of FIG. 8, a line 840 indicates a driving voltage adjusted over time. A line 850 indicates a vibration strength identified over time. An x-axis of the graph 830 indicates time, and a y-axis indicates the voltage of the driving voltage and the vibration strength.

Referring to the graph 800 of FIG. 8, the electronic device may control the vibration motor based on a preset vibration strength Gp. Referring to the line 820, in case that the vibration strength of the vibration motor is less than or equal to the preset vibration strength Gp, the processor may increase the driving voltage of the vibration motor in a preset voltage range. For example, in case that the vibration strength of the vibration motor is less than or equal to the preset vibration strength Gp, the driving voltage indicated by the line 810 may increase to an upper limit Vm of the preset voltage range. While the vibration strength maintains the preset vibration strength Gp, the electronic device may identify a resonant frequency for the preset vibration strength Gp and a driving voltage corresponding to the resonant frequency based on a sweep of the frequency and/or the voltage.

Referring to the graph 830 of FIG. 8, the electronic device may change the frequency of the alternate current signal in an order of f2, f0, and f3 over time, and identify a driving voltage required to output the preset vibration strength Gp at each frequency. Referring to the line 850 of FIG. 8, while the vibration strength maintains the preset vibration strength Gp, the electronic device may identify a voltage required to output the preset vibration strength Gp at each frequency. Referring to the line 840 and/or the line 810, at a frequency of the identified minimum frequency value f0, the voltage required to output the preset vibration strength Gp is minimized at the identified minimum voltage value Vf0. According to an embodiment, the electronic device may store a combination of the voltage Vf0 and the frequency f0 at the voltage Vf0 as a combination of the resonant frequency and the driving voltage of the vibration motor outputting the preset vibration strength Gp. After storing the combination, the electronic device may load the stored combination into the vibration motor driver while loading a driver and/or firmware for driving the vibration motor. The vibration motor driver may control the vibration motor based on the loaded combination.

Referring to FIG. 8, it may be seen that a frequency f1 is a frequency required to obtain the preset vibration strength Gp at a fixed driving voltage, and requires a voltage higher than the voltage Vf0 identified based on a sweep of the frequency and the voltage. For example, the electronic device may optimize the voltage and the frequency required to output vibration of a specific vibration strength (e.g., Gp) based on the sweep of the frequency and the voltage.

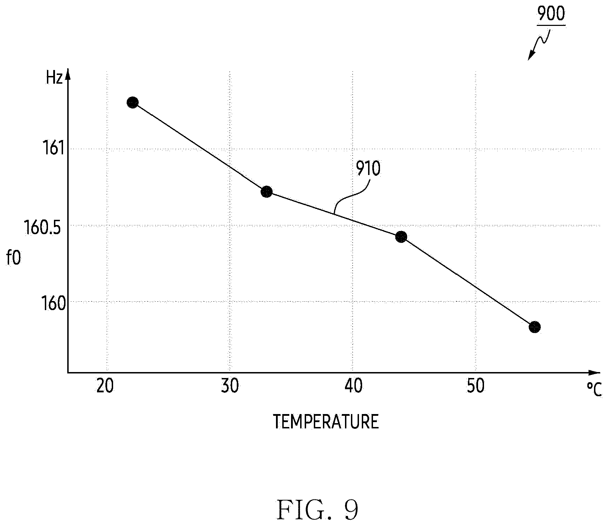

Hereinafter, according to an embodiment, an example of an operation in which the electronic device obtains the voltage and the frequency required to output vibration of the preset vibration strength based on a relationship between the vibration strength, the driving voltage, the resonant frequency, and the temperature will be described with reference to FIG. 9.

FIG. 9 illustrates an example of a relationship between a temperature and a resonant frequency identified by an electronic device according to an embodiment. An electronic device 101 of FIGS. 1 to 2, a processor 210 of FIG. 2, and/or a vibration motor controller 230 of FIGS. 2 and 7 may perform an operation described with reference to FIG. 9.

A graph 900 of FIG. 9 indicates a relationship between the resonant frequency and the temperature of a vibration motor (e.g., a vibration motor 240 of FIGS. 2 and 7). Referring to a line 910, as the temperature increases, the resonant frequency may gradually decrease. For example, the relationship between the temperature and the resonant frequency may be related to the characteristics of a damping material (e.g., Poron) included in the vibration motor. For example, since stiffness of the damping material decreases as the temperature increases, the resonant frequency may decrease as the temperature increases. The relationship between the resonant frequency and the temperature is not limited to the graph 900 and/or the line 910.

According to an embodiment, the electronic device may perform calibration on the vibration motor based on the relationship between the temperature and the resonant frequency indicated by the line 910. For example, based on the temperature identified while performing the calibration, the electronic device may change and/or replace the resonant frequency identified based on operation 650 of FIG. 6. For example, the electronic device may adjust the resonant frequency of the alternate current signal according to the identified temperature in a state in which a temperature different from a preset temperature range (e.g., a temperature range between approximately 0°C and approximately 30°C) is identified based on a temperature sensor (e.g., a temperature sensor 252 of FIG. 7). The electronic device may replace the resonant frequency stored in control information (e.g., control information 222 of FIGS. 2 to 7) with a resonant frequency adjusted based on the temperature.

For example, the electronic device may change the resonant frequency based on a correction coefficient (or correction constant) related to the temperature identified from the temperature sensor. The electronic device may store the changed resonant frequency in memory as a resonant frequency for a driving voltage. The correction coefficient may be set to compensate for shifting of the resonant frequency according to the temperature, indicated by the graph 900 and/or the line 910. The correction coefficient may be determined based on a proportional equation for the temperature, and/or may be determined based on a look-up table of memory.

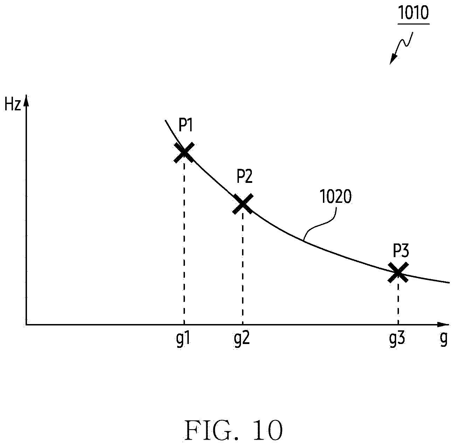

Hereinafter, according to an embodiment, an example of an operation in which the electronic device obtains the voltage and the frequency required to output vibration of a preset vibration strength based on a relationship between the vibration strength, the driving voltage, the resonant frequency, and weight will be described with reference to FIGS. 10 to 11.

FIG. 10 illustrates an example of a relationship between weight of an electronic device and a resonant frequency, identified by the electronic device according to an embodiment. An electronic device 101 of FIGS. 1 to 2, a processor 210 of FIG. 2, and/or a vibration motor controller 230 of FIGS. 2 and 7 may perform an operation described with reference to FIG. 10.

A graph 1010 of FIG. 10 indicates a relationship between weight and a resonant frequency of the electronic device including a vibration motor (e.g., a vibration motor 240 of FIGS. 2 and/or 7). An x-axis of the graph 1010 indicates the weight (e.g., a unit of gram) of the electronic device. A y-axis of the graph 1010 indicates the resonant frequency. Referring to a line 1020 of the graph 1010, as the weight of the electronic device increases, the resonant frequency of the vibration motor may decrease. The embodiment is not limited thereto.

According to an embodiment, the electronic device may identify an external object that is attachable to the electronic device, such as a case 510 of FIG. 5. The electronic device may identify the external object by using a sensor (e.g., a hall sensor 256 of FIGS. 2 and/or 7). The embodiment is not limited thereto, and the electronic device may identify the external object by using a proximity sensor and/or a grip sensor. According to an embodiment, the electronic device may identify the external object based on a user input indicating that the external object is attached.

In an embodiment, the electronic device that identified the external object may identify a change in the resonant frequency according to a change in weight. The electronic device that identified the change in the resonant frequency may obtain a combination of the resonant frequency and a voltage for the vibration motor of the electronic device to which the external object is coupled, by performing calibration described with reference to FIG. 6. After obtaining the combination, the electronic device may transmit an alternate current signal having the resonant frequency and the voltage included in the combination to the vibration motor, in response to an event for outputting the vibration notification.

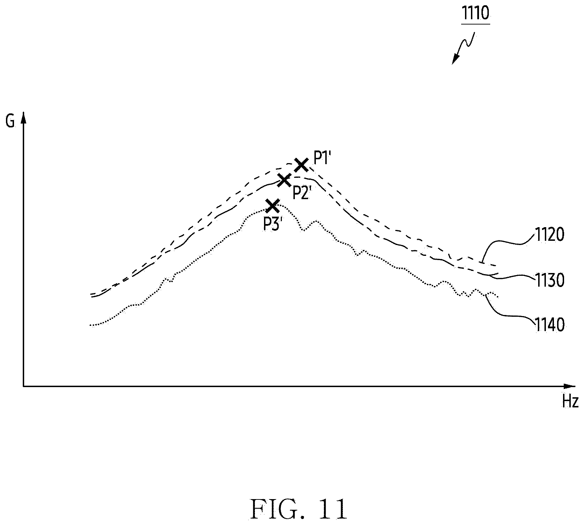

FIG. 11 illustrates an example of a relationship between weight, a frequency, and a vibration strength identified by an electronic device according to an embodiment. An electronic device 101 of FIGS. 1 to 2, a processor 210 of FIG. 2, and/or a vibration motor controller 230 of FIGS. 2 and 7 may perform an operation described with reference to FIG. 11.

A graph 1110 of FIG. 11 indicates the relationship between the weight, the frequency, and the vibration strength of an electronic device including a vibration motor (e.g., a vibration motor 240 of FIGS. 2 and 7). An x-axis of the graph 1110 indicates a frequency of an alternate current signal inputted to the vibration motor. A y-axis of the graph 1110 indicates the vibration strength of the vibration motor. Lines 1120, 1130, and 1140 of the graph 1110 may correspond to each of electronic devices having different weights. For example, a line 1120 indicates a relationship between the frequency and the vibration strength of the vibration motor included in the electronic device of a first weight (e.g., g1 of FIG. 10). A point P1' of the line 1120 of FIG. 11 indicates a maximum value of the vibration strength of the vibration motor of the electronic device of the first weight and a resonant frequency at the vibration strength. For example, the line 1130 indicates a relationship between the frequency and the vibration strength of the vibration motor included in the electronic device of a second weight (e.g., g2 of FIG. 10). A point P2' of the line 1130 of FIG. 11 indicates a maximum value of the vibration strength of the vibration motor of the electronic device of the second weight and the resonant frequency at the vibration strength. For example, a line 1140 indicates a relationship between the frequency and the vibration strength of the vibration motor included in the electronic device of a third weight (e.g., g3 of FIG. 10). A point P3' of the line 1140 of FIG. 11 indicates the maximum value of the vibration strength of the vibration motor of the electronic device having the third weight and the resonant frequency at the vibration strength.

As described above, the resonant frequency of the vibration motor included in the electronic device may be changed by a change in weight due to a combination of the electronic device and the external object. Considering the characteristics of the resonant frequency described above, according to an embodiment, the electronic device may at least partially change control information (e.g., control information 222 of FIGS. 2 and/or 7) in response to an event (e.g., attachment and/or detachment of a case 510 of FIG. 5) that causes a change in weight. For example, the electronic device may identify a relationship between a driving voltage and the resonant frequency related to the weight, by performing calibration of the vibration motor based on the changed weight.

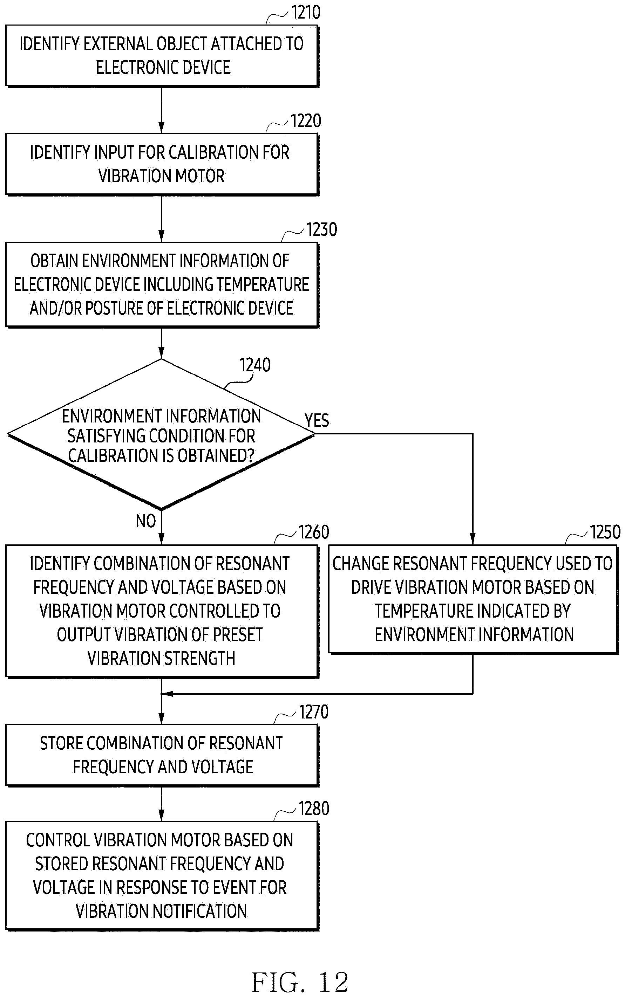

FIG. 12 illustrates an example of a flowchart of an electronic device according to an embodiment. An electronic device 101 of FIGS. 1 to 2, a processor 210 of FIG. 2, and/or a vibration motor controller 230 of FIG. 2 may perform an operation described with reference to FIG. 12.

Referring to FIG. 12, in operation 1210, according to an embodiment, a processor of the electronic device may identify an external object (e.g., a case 510 of FIG. 5) attached to the electronic device. For example, the external object may have a shape engaged in at least a portion of a housing of the electronic device. Alternatively, the external object may include a chemical material that is attachable to the electronic device. According to an embodiment, the processor of the electronic device may identify the external object attached to the electronic device based on a hall sensor 256, a proximity sensor, and/or a grip sensor. The embodiment is not limited thereto, and the electronic device may perform operation 1210 based on a user input indicating attachment of the external object.

The processor of the electronic device that identified the external object based on operation 1210 may display a screen for calibration for the vibration motor on a display (e.g., a display 110 of FIGS. 1 and 5). Referring to FIG. 12, in operation 1220, according to an embodiment, the processor of the electronic device may identify an input for the calibration for the vibration motor. The input may include an input indicating selection of a visual object (e.g., a visual object 540 of FIG. 5) displayed on the screen.

Referring to FIG. 12, in operation 1230, according to an embodiment, the processor of the electronic device may obtain environment information of the electronic device including a temperature and/or a posture of the electronic device. For example, the processor may identify the posture of the electronic device based on an acceleration sensor 254 of FIG. 2. The processor may identify the temperature of the electronic device by using a temperature sensor 252 of FIG. 2.

Referring to FIG. 12, in operation 1240, according to an embodiment, the processor of the electronic device may identify whether environment information satisfying a condition for the calibration is obtained. The condition for the calibration may be related to the posture and/or the temperature of the electronic device. For example, based on whether the posture of the electronic device indicated by the environment information is a preset posture for the calibration of the electronic device, the processor may initiate calibration for the vibration motor. The preset posture may include, for example, a posture in which a rear surface of the electronic device faces ground. The preset posture may include a posture supported by the rear surface of the electronic device.

For example, based on whether the temperature of the electronic device indicated by the environment information of operation 1240 is included in a temperature range requiring correction of the resonance frequency, the processor may selectively perform any one of the operations 1250 and 1260. For example, in case that the temperature indicated by the environment information is included in the temperature range, the processor may perform operation 1260. For example, in case that the temperature indicated by the environment information is not included in the temperature range, the processor may perform operation 1250.

Referring to FIG. 12, in operation 1250, according to an embodiment, the processor of the electronic device, may change the resonant frequency used to drive the vibration motor based on the temperature indicated by the environment information. The processor may obtain a combination of the driving voltage and the resonant frequency for the vibration motor, by performing at least one of the operations of FIG. 6. In operation 1250, the processor may change the resonant frequency included in the combination based on the temperature.

Referring to FIG. 12, in operation 1260, according to an embodiment, the processor of the electronic device may identify the combination of the resonant frequency and the voltage based on a vibration motor controlled to output vibration of a preset vibration strength. The processor may identify a combination of operations 1260 by performing at least one of operations of FIG. 6.

Referring to FIG. 12, in operation 1270, according to an embodiment, the processor of the electronic device may store the combination of the resonant frequency and the voltage. In case that the combination of the resonant frequency and the voltage is identified based on operation 1260, the processor may store the combination of the resonant frequency and the voltage of operation 1260 in memory (e.g., memory 220 of FIG. 2) as control information for driving the vibration motor of the electronic device to which the external object is attached. In case that the resonant frequency is changed based on operation 1250, the processor may store the changed combination of the resonant frequency and the driving voltage in the memory as the control information.

Referring to FIG. 12, in operation 1280, according to an embodiment, the processor of the electronic device may control the vibration motor based on the resonant frequency and the voltage stored in the memory in response to the event for the vibration notification. After operation 1270, the processor may control the vibration motor by using the combination stored by operation 1270, based on identifying the event.

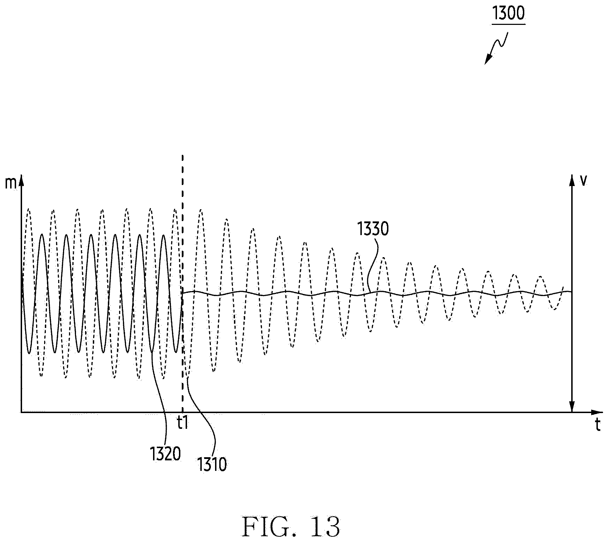

Hereinafter, an example of an operation of an electronic device that measures vibration strength by using a back-electro motive force (back-EMF) and identifies a combination between the driving voltage and the resonant frequency based on the measured vibration strength will be described with reference to FIGS. 13 to 14.

FIG. 13 illustrates a graph for describing an operation of an electronic device for identifying a back-electro motive force (back-EMF). An electronic device 101 of FIGS. 1 to 2, a processor 210 of FIG. 2, and/or a vibration motor controller 230 of FIGS. 2 and 7 may perform the operation described with reference to FIG. 13.

According to an embodiment, the electronic device may identify a vibration strength based on a current of the alternate current signal transmitted to a vibration motor (e.g., a vibration motor 240 of FIGS. 2 and 7). The electronic device may identify an impedance of the vibration motor by using the current. The electronic device may identify the back-electro motive force (back-EMF) caused to the vibration motor while at least temporarily stopping providing an alternate current signal to the vibration motor. A graph 1300 of FIG. 13 indicates a voltage of the alternate current signal inputted to the vibration motor of the electronic device, a location of a mass (e.g., a mass 244 of FIG. 2) included in the vibration motor, and the back-electro motive force (back-EMF) caused to the vibration motor according to an embodiment. An x-axis of the graph 1300 indicates time, and a y-axis indicates the voltage and the location.

According to an embodiment, the electronic device may input the alternate current signal to the vibration motor during a time interval before a t1 timing. A line 1320 indicates the voltage of the alternate current signal. The vibration motor that receives the alternate current signal may move the mass in the vibration motor based on the alternate current signal. A line 1310 indicates a location of the mass in the vibration motor. During the time interval before the t1 timing, a displacement (or location) x of the mass, a spring constant k of the spring in the vibration motor (e.g., a spring 245 of FIG. 2) and a frequency f of the vibration motor may have a relationship of Equation 1.

【 Equation 1 】

$$m\frac{d^2x}{dt^2} + c\frac{dx}{dt} + kx = F0 \; \sin(2\pi ft)$$

In Equation 1, c is a damping coefficient of the vibration motor, and F0 is the driving force, which may be proportional to a driving voltage of the vibration motor.

At timing t1, the electronic device may stop inputting the alternate current signal to the vibration motor. After the timing t1, the voltage of the alternate current signal indicated by the line 1320 may be substantially reduced to zero. After the t1 timing, since the mass in the vibration motor continues to move based on inertia, the location of the mass indicated by the line 1310 may be gradually reduced to zero. Since the mass continues to move after supply of the alternate current signal is stopped, the back-electro motive force (back-EMF) may be generated in the vibration motor. In an embodiment, the back-electro motive force (back-EMF) BEMF may be indicated as Equation 2 with respect to the displacement x of the mass indicated by the line 1310.

【Equation 2】

$$m\frac{d^2x}{dt^2} + c\frac{dx}{dt} + kx = 0$$

$$BEMF = \alpha\frac{dx}{dt}$$

Referring to Equation 2, as a state of the mass changes from forced oscillation to damped oscillation after the transmission of the alternate current signal is stopped, the displacement x of the mass may be exponentially damped. A frequency at which the mass moves may converge to a resonant frequency. Referring to the back-electro motive force (back-EMF) BEMF of Equation 2, the back-electro motive force (back-EMF) BEMF may be generated in proportion to a speed of the mass. The back-electro motive force (back-EMF) BEMF may be identified based on the voltage of the vibration motor.

During damped oscillation, the displacement x of the mass may have a relationship of Equation 3. For example, the displacement x of the mass indicated by the line 1310 in the time interval after the timing t1 may be indicated by Equation 3.

【Equation 3】

$$x(t) = Ae^{-\Omega t}\sin(\sqrt{\omega_0^2 - \Omega^2}\ t + \Phi) \cong Ae^{-\Omega t}\sin(\omega_0 t + \Phi)$$

$\Omega = c/2m$ of Equation 3, wherein c may be the damping coefficient and m may be weight of the mass. $\omega_0 = 2\pi \cdot f0$ of Equation 3, wherein f0 may be the resonant frequency. A and $\varphi$ are constants, and in case that $\omega_0$ is sufficiently greater than $\Omega$, the angular velocity of x(t) may be approximated by constant $\omega_0$. A voltage Vb (a line 1330 after t>t1) of the vibration motor caused by the back-electro motive force (back-EMF) BEMF may have a relationship of Equation 4.

【Equation 4】

$$V_b(t) \cong Be^{-\Omega t}\sin(\omega_0 t + \Phi)$$

Referring to Equation 4, since the vibration frequency of the vibration motor caused by the back-electro motive force (back-EMF) is $\omega_0 = 2\pi \cdot f0$, it may correspond to the resonant frequency f0. According to an embodiment, the electronic device may identify the resonant frequency based on a frequency of a voltage of a back-electro motive force (back-EMF) caused by the vibration motor, which is identified after blocking the alternate current signal inputted to the vibration motor. For example, the electronic device may identify a resonant frequency corresponding to a driving voltage of the alternate current signal. The electronic device may store a combination (or pair) of the identified resonant frequency and the driving voltage in the memory.

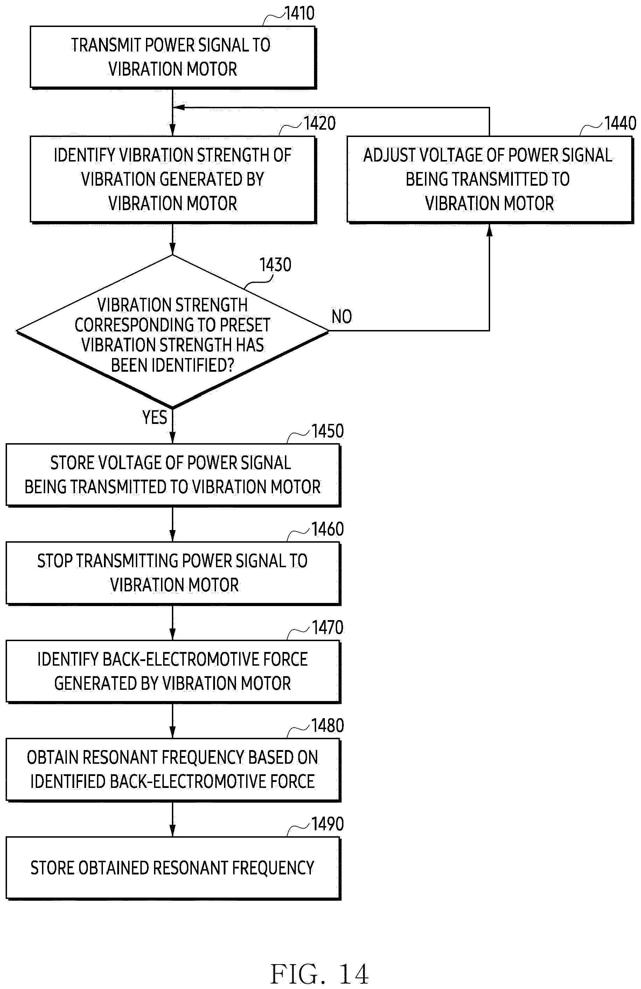

Hereinafter, an operation of the electronic device described with reference to FIG. 14 will be described.

FIG. 14 illustrates an example of a flowchart of an electronic device according to an embodiment. An electronic device 101 of FIGS. 1 to 2, a processor 210 of FIG. 2, and/or a vibration motor controller 230 of FIG. 2 may perform an operation described with reference to FIG. 14. The operation of the electronic device described with reference to FIG. 14 may be related to operations of FIG. 6.

Referring to FIG. 14, in operation 1410, according to an embodiment, a processor of the electronic device may transmit a power signal to a vibration motor (e.g., a vibration motor 240 of FIGS. 2 and 7). Similar to operation 610 of FIG. 6, the processor may perform operation 1410 of FIG. 14.

Referring to FIG. 14, in operation 1420, according to an embodiment, the processor of the electronic device may identify a vibration strength of vibration generated by the vibration motor. Similar to operation 620 of FIG. 6, the processor may perform operation 1420 of FIG. 14.

Referring to FIG. 14, in operation 1430, according to an embodiment, the processor of the electronic device may determine whether a vibration strength corresponding to a preset vibration strength has been identified. The processor may perform operation 1430 of FIG. 14, similar to operation 630 of FIG. 6. In case that a vibration strength different from the preset vibration strength is identified (1430-No), the processor may perform operation 1440. In case that the vibration strength corresponding to the preset vibration strength is identified (1430-Yes), the processor may perform operation 1450.

Referring to FIG. 14, in operation 1440, according to an embodiment, the processor of the electronic device may adjust a voltage of a power signal being transmitted to the vibration motor. Similar to operation 640 of FIG. 6, the processor may adjust the voltage so that the vibration strength of the vibration motor corresponds to the preset vibration strength.

Referring to FIG. 14, in operation 1450, according to an embodiment, the processor of the electronic device may store the voltage of the power signal being transmitted to the vibration motor. For example, the voltage of operation 1450 may be determined as a voltage corresponding to a resonant frequency required to output the preset vibration strength. The processor may store the voltage in memory of the electronic device (e.g., memory 220 of FIGS. 2 and 7).

Referring to FIG. 14, in operation 1460, according to an embodiment, the processor of the electronic device may stop transmitting the power signal to the vibration motor. After the transmission of the power signal is stopped, a back-electro motive force (back-EMF) may be generated in the vibration motor due to inertia of a mass included in the vibration motor. Referring to FIG. 14, in operation 1470, according to an embodiment, the processor of the electronic device may identify the back-electro motive force (back-EMF) generated by the vibration motor. The processor may identify the back-electro motive force (back-EMF) of operation 1470 by measuring a voltage of the vibration motor.

As described above with reference to Equations 1 to 4, a voltage of the back-electro motive force (back-EMF) may have the resonant frequency. Referring to FIG. 14, in operation 1480, according to an embodiment, the processor of the electronic device may obtain the resonant frequency based on the identified back-electro motive force (back-EMF). For example, a frequency of the back-electro motive force (back-EMF) may be the resonant frequency of operation 1480. According to an embodiment, the processor of the electronic device may store the obtained resonant frequency in the memory based on operation 1490. For example, the processor may store the resonant frequency as a combination for the stored voltage based on operation 1450. A combination of the voltage and the resonant frequency stored based on the operations 1450 and 1490 may be used to generate an alternate current signal (or a power signal) to be transmitted to the vibration motor in response to an event for output of a vibration notification generated after the operation 1490.

As described above, according to an embodiment, the electronic device may control the vibration motor based on the combination of the voltage and the resonant frequency. The electronic device may obtain a driving voltage corresponding to the resonant frequency in order to control the vibration motor that outputs vibration of the preset vibration strength based on the resonant frequency. Since the vibration motor is controlled based on the resonant frequency, power consumption in the vibration motor may be reduced, and power efficiency of the vibration motor may be improved. The electronic device may control the vibration motor based on the optimized power efficiency at each of the vibration levels, by using combinations of voltage and resonant frequencies corresponding to different vibration levels.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth™, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mm Wave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501.

According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g.,

modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The electronic device 1501 of FIG. 15 may be an example of the electronic device described with reference to FIGS. 1 to 14. For example, the processor 1520 of FIG. 15 may correspond to a processor 210 of FIGS. 2 to 7. The haptic module 1579 of FIG. 15 may correspond to a vibration motor controller 230 and/or a vibration motor 240 of FIGS. 2 to 7.

In an embodiment, a method of improving power efficiency of a vibration motor based on a resonant frequency may be required. As described above, according to an embodiment, an electronic device (e.g., an electronic device 101 of FIG. 1 and/or an electronic device 1501 of FIG. 15) may include a vibration motor (e.g., a vibration motor 120 of FIG. 1 and/or a vibration motor 240 of FIG. 2) and a processor (e.g., a processor 210 of FIG. 2). The processor may be configured to identify a vibration level indicated by the event in response to the event for outputting a vibration notification. The processor may be configured to identify a voltage and a resonant frequency corresponding to the vibration level based on control information (e.g., control information 220 of FIG. 2) for the vibration motor. The processor may be configured to transmit an alternate current signal having the identified voltage and the identified resonant frequency to the vibration motor in order to output the vibration notification based on the vibration level by using the vibration motor. For example, the processor may be configured to identify a combination of the voltage and the resonant frequency corresponding to the vibration level, among combinations of the voltage and the resonant frequency included in the control information for the vibration motor. The processor may be configured to transmit the alternate current signal having the voltage and the resonant frequency included in the combination to the vibration motor in order to output the vibration notification based on the vibration level by using the vibration motor.

For example, the processor may be configured to identify the control information, which is a look-up table including combinations of voltage and resonant frequency corresponding to a plurality of vibration levels, from memory (e.g., a memory 220 of FIG. 2) of the electronic device.

For example, the electronic device may further include a communication circuit. The processor may be configured to identify, based on a signal for call establishment that is received through the communication circuit, an occurrence of the event. The processor may be configured to identify, based on the event associated with the call establishment, the voltage and the resonant frequency corresponding to a maximum vibration level among a plurality of preset vibration levels.

For example, the processor may be configured to transmit, based on identifying the event for outputting the vibration notification in a maximum vibration level among a plurality of preset vibration levels, the alternate current signal having the voltage and the resonant frequency indicated by the control information to the vibration motor.

For example, the processor may be configured to configured to transmit, based on identifying the event for outputting the vibration notification in another vibration level different from the maximum vibration level among the plurality of preset vibration levels, another alternate current signal having another voltage lower than the voltage to the vibration motor.

For example, the electronic device may include a display (e.g., a display 110 of FIG. 2) and one or more sensors (e.g., a sensor 250 of FIG. 2). The processor may be configured to display a screen for calibration of the vibration motor on the display based on identifying an external object attached to the electronic device based on the one or more sensors. The processor may be configured to change the control information stored in memory of the electronic device based on the vibration motor controlled to output the preset vibration strength in response to an input related to the screen.

For example, the processor may be configured to identify a minimum value of a voltage of an alternate current signal transmitted to the vibration motor while the vibration motor is controlled to output a vibration notification of the preset vibration strength. The processor may be configured to change the voltage stored in the memory of the electronic device based on the identified minimum value.

For example, the processor may be configured to obtain another frequency for replacing the resonant frequency stored in the memory of the electronic device, by adjusting a frequency of the alternate current signal according to the identified temperature, in a state of identifying a temperature different from a preset temperature range based on the one or more sensors.

For example, the processor may be configured to identify the resonant frequency and the voltage, stored in the memory of the electronic device, to control the vibration motor based on the resonance of the vibration motor while the electronic device is booting.

As described above, according to an embodiment, a method of an electronic device may include identifying (e.g., operation 310 of FIG. 3) a vibration level indicated by the event, in response to an event for outputting the vibration notification. The method may include identifying (e.g., operation 320 of FIG. 3) a voltage and a resonant frequency corresponding to the vibration level based on control information for a vibration motor of the electronic device. In order to output the vibration notification based on the vibration level by using the vibration motor, the method may include transmitting (e.g., operation 330 of FIG. 3) an alternate current signal having the identified voltage and the identified resonant frequency to the vibration motor.

For example, identifying the vibration level may include identifying the control information, which is a look-up table including combinations of a voltage and a resonant frequency corresponding to a plurality of vibration levels, from the memory of the electronic device.

For example, identifying the vibration level may include identifying the occurrence of the event based on a signal for call establishment received through a communication circuit of the electronic device. Identifying the vibration level may include identifying the voltage and the resonant frequency corresponding to a maximum vibration level among a plurality of preset vibration levels, based on the event related to the call establishment.

For example, the transmitting may include transmitting, based on identifying the event for outputting the vibration notification in a maximum vibration level among a plurality of preset vibration levels, the alternate current signal having the voltage and the resonant frequency indicated by the control information to the vibration motor.

For example, the transmitting may include transmitting, based on identifying the event for outputting the vibration notification in another vibration level different from the maximum vibration level among the plurality of preset vibration levels, another alternate current signal having another voltage lower than the voltage to the vibration motor.

For example, the method may include displaying a screen for calibration of the vibration motor on the display of the electronic device based on identifying an external object attached to the electronic device based on one or more sensors of the electronic device. The method may include changing the control information stored in the memory of the electronic device based on the vibration motor controlled to output the preset vibration strength in response to an input related to the screen.

For example, the changing may include identifying a minimum value of the voltage of the alternate current signal transmitted to the vibration motor while the vibration motor is controlled to output a vibration notification of the preset vibration strength. The changing may include changing the voltage stored in memory of the electronic device based on the identified minimum value.

For example, the changing operation may include obtaining another frequency for replacing the resonant frequency stored in the memory of the electronic device, by adjusting the frequency of the alternate current signal according to the identified temperature, in the state of identifying a temperature different from the preset temperature range based on one or more sensors.

For example, the method may include identifying the resonant frequency and the voltage stored in the memory of the electronic device to control the vibration motor based on the resonance of the vibration motor while the electronic device is booting.

As described above, according to an embodiment, an electronic device (e.g., an electronic device 101 of FIG. 1 and/or an electronic device 1501 of FIG. 15) may include a vibration motor (e.g., a vibration motor 120 of FIG. 1 and/or a vibration motor 240 of FIG. 2), memory (e.g., memory 220 of FIG. 2) and a processor (e.g., a processor 210 of FIG. 2). The processor may be configured to obtain information indicating the vibration strength of the vibration motor while transmitting the alternate current signal having a frequency to the vibration motor. The information may include a relation between the vibration strength of the vibration motor and the frequency of the alternate current signal. The processor may be configured to identify a minimum voltage of a voltage of the alternate current signal as an identified minimum voltage value (Vf0), and the frequency of the alternate current signal at the identified minimum voltage value as an identified minimum frequency value (f0) while controlling the vibration motor to output vibration having a preset vibration strength based on the information from the vibration motor. The processor may be configured to store a combination of the identified minimum frequency value (f0) and the identified minimum voltage value (Vf0) in the memory.

For example, the electronic device may include a temperature sensor (e.g., the temperature sensor 252 of FIG. 2). The processor may be configured to change the identified minimum frequency value (f0) based on a temperature identified from the temperature sensor. The processor may be configured to store in the memory the combination of the identified minimum frequency value (f0) as changed and the identified minimum voltage value (Vf0).

For example, the processor may be configured to, based on a current of the alternate current signal transmitted to the vibration motor, obtain the information indicating the vibration strength.

For example, the processor may be configured to obtain the information including at least one of an impedance of the vibration motor identified based on the current of the alternate current signal and/or a back-electro motive force (back-EMF) caused by the vibration motor.

For example, the processor may be configured to obtain information indicating the vibration strength based on at least one of an acceleration sensor that is associated with a mass included in the vibration motor or a hall sensor.

For example, the processor may be configured to, based on identifying an event or command to output a vibration notification after storing the combination, transmit to the vibration motor an alternate current signal having the frequency and the minimum voltage included in the combination.

For example, the processor may be configured to, based on an event or command associated with calibration of the vibration motor, initiate transmitting the alternate current signal to the vibration motor.

For example, the processor may be configured to, while a difference between the vibration strength indicated by the information and the preset vibration strength is lower than a threshold, identify the minimum voltage of the voltage of the alternate current signal and the frequency of the alternate current signal at the minimum voltage.

As described above, according to an embodiment, a method of an electronic device, may comprise, while transmitting an alternate current signal at a frequency to a vibration motor of the electronic device, obtaining information indicating a vibration strength of the vibration motor. The information may include a relation between the vibration strength of the vibration motor and the frequency of the alternate current signal. The method may comprise, while controlling the vibration motor to output vibration from the vibration motor having a preset vibration strength based on the information, identifying a minimum voltage of a voltage of the alternate current signal as an identified minimum voltage value (Vf0), and the frequency of the alternate current signal at the identified minimum voltage value as an identified minimum frequency value (f0). The method may comprise storing in memory of the electronic device a combination of the identified minimum frequency value (f0) and the identified minimum voltage value (Vf0).

For example, the method may comprise changing the identified minimum frequency value (f0) based on a temperature identified from the temperature sensor of the electronic device. The storing may comprise storing in the memory the combination of the identified minimum frequency value (f0) as changed and the identified minimum voltage value (Vf0).

For example, the obtaining may comprise, based on a current of the alternate current signal transmitted to the vibration motor, obtaining the information including at least one of an impedance of the vibration motor and/or a back-electro motive force (back-EMF) caused by the vibration motor.

For example, the obtaining may comprise obtaining information indicating the vibration strength based on at least one of an acceleration sensor that is associated with a mass included in the vibration motor or a hall sensor.

For example, the method may comprise, based on identifying another event or command to output a vibration notification from a processor of the electronic device, after storing the combination, transmitting to the vibration motor an alternate current signal having the frequency and the minimum voltage included in the combination.

For example, the method may comprise, based on an event or command associated with calibration of the vibration motor, transmitting the alternate current signal to the vibration motor.

For example, the identifying may comprise, while a difference between the vibration strength indicated by the information and the preset vibration strength is lower than a threshold, identifying the minimum voltage of the voltage of the alternate current signal and the frequency of the alternate current signal at the minimum voltage.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

**Claims**

1.  An electronic device (101; 1501), comprising:

    a vibration motor (120; 240)
    memory (220); and
    a processor (210), wherein the processor is configured to:

    while transmitting an alternate current signal having a frequency to the vibration motor, obtain information indicating a vibration strength of the vibration motor, wherein the information includes a relation between the vibration strength of the vibration motor and the frequency of the alternate current signal;
    while controlling the vibration motor to output vibration from the vibration motor having a preset vibration strength based on the information, identify a minimum voltage of a voltage of the alternate current signal as an identified minimum voltage value (Vf0), and the frequency of the alternate current signal at the identified minimum voltage value as an identified minimum frequency value (f0); and
    store in the memory (220) a combination of the identified minimum frequency value (f0) and the identified minimum voltage value (Vf0).

2.  The electronic device of claim 1, further comprising a temperature sensor (252);
    wherein the processor (210) is configured to:

    change the identified minimum frequency value (f0) based on a temperature identified from the temperature sensor; and
    store in the memory (220) the combination of the identified minimum frequency value (f0) as changed and the identified minimum voltage value (Vf0).

3.  The electronic device of any one of claims 1-2,
    wherein the processor (210) is configured to:
    based on a current of the alternate current signal transmitted to the vibration motor (120; 240), obtain the information indicating the vibration strength.

4.  The electronic device of claim 3,
    wherein the processor (210) is configured to:
    obtain the information including at least one of an impedance of the vibration motor (120; 240) identified based on the current of the alternate current signal and/or a back-electro motive force (back-EMF) caused by the vibration motor.

5.  The electronic device of any one of claims 1-4,
    wherein the processor (210) is configured to:
    obtain information indicating the vibration strength based on at least one of an acceleration sensor (254) that is associated with a mass (244) included in the vibration motor (120; 240) or a hall sensor (256).

6.  The electronic device of any one of claims 1-5,
    wherein the processor (210) is configured to:
    based on identifying an event or command to output a vibration notification after storing the combination, transmit to the vibration motor (120; 240) an alternate current signal having the frequency and the minimum voltage included in the combination.

7.  The electronic device of any one of claims 1-6,

wherein the processor (210) is configured to:
based on an event or command associated with calibration of the vibration motor (120; 240), initiate transmitting the alternate current signal to the vibration motor.

8. The electronic device of any one of claims 1-7,
wherein the processor (210) is configured to:
while a difference between the vibration strength indicated by the information and the preset vibration strength is lower than a threshold, identify the minimum voltage of the voltage of the alternate current signal and the frequency of the alternate current signal at the minimum voltage.

9. A method of an electronic device, comprising:

while transmitting an alternate current signal at a frequency to a vibration motor (120; 240) of the electronic device, obtaining information indicating a vibration strength of the vibration motor, wherein the information includes a relation between the vibration strength of the vibration motor and the frequency of the alternate current signal;
while controlling the vibration motor to output vibration from the vibration motor having a preset vibration strength based on the information, identifying a minimum voltage of a voltage of the alternate current signal as an identified minimum voltage value (Vf0) and the frequency of the alternate current signal at the identified minimum voltage value as an identified minimum frequency value (f0); and
storing in memory (220) of the electronic device a combination of the identified minimum frequency value (f0) and the identified minimum voltage value (Vf0).

10. The method of claim 9, further comprising:

changing the identified minimum frequency value (f0) based on a temperature identified from a temperature sensor (252) of the electronic device, and
wherein the storing comprising:
storing in the memory (220) the combination of the identified minimum frequency value (f0) as changed and the identified minimum voltage value (Vf0).

11. The method of any one of claims 9-10, wherein the obtaining comprises:
based on a current of the alternate current signal transmitted to the vibration motor (120; 240), obtaining the information including at least one of an impedance of the vibration motor and/or a back-electro motive force (back-EMF) caused by the vibration motor.

12. The method of any one of claims 9-11, wherein the obtaining comprises:
obtaining information indicating the vibration strength based on at least one of an acceleration sensor (254) that is associated with a mass (244) included in the vibration motor (120; 240) or a hall sensor (256).

13. The method of any one of claims 9-12, further comprising:
based on identifying another event or command to output a vibration notification from a processor of the electronic device after storing the combination, transmitting to the vibration motor (120; 240) an alternate current signal having the frequency and the minimum voltage included in the combination.

14. The method of any one of claims 9-13, further comprising:
based on an event or command associated with calibration of the vibration motor (120; 240), transmitting the alternate current signal to the vibration motor.

15. The method of any one of claims 9-14, wherein the identifying comprising:
while a difference between the vibration strength indicated by the information and the preset vibration strength is lower than a threshold, identifying the minimum voltage of the voltage of the alternate current signal and the frequency of the alternate current signal at the minimum voltage.

FIG. 1

FIG. 2

IDENTIFY VIBRATION LEVEL INDICATED BY EVENT IN
RESPONSE TO EVENT FOR OUTPUTTING
VIBRATION NOTIFICATION ～ 310

IDENTIFY VOLTAGE AND RESONANT FREQUENCY
CORRESPONDING TO VIBRATION LEVEL BASED ON
CONTROL INFORMATION FOR VIBRATION MOTOR ～ 320

TRANSMIT ALTERNATE CURRENT SIGNAL HAVING
IDENTIFIED VOLTAGE AND IDENTIFIED RESONANT
FREQUENCY TO VIBRATION MOTOR ～ 330

FIG. 3

FIG. 4

510

101

110

12:48    LTE

CALIBRATE VIBRATION
MOTOR                    520

PUT DEVICE ON GROUND,
THEN PRESS START BUTTON    530

START    540

FIG. 5

~610

TRANSMIT ALTERNATE CURRENT SIGNAL TO VIBRATION MOTOR BASED ON EVENT RELATED TO CALIBRATION OF VIBRATION MOTOR

~620

IDENTIFY VIBRATION STRENGTH OF VIBRATION GENERATED BY VIBRATION MOTOR RECEIVING ALTERNATE CURRENT SIGNAL

~640

ADJUST VOLTAGE AND/OR FREQUENCY OF ALTERNATE CURRENT SIGNAL

630

VIBRATION STRENGTH CORRESPONDING TO PRESET VIBRATION STRENGTH IS IDENTIFIED?

NO

YES

~650

IDENTIFY MINIMUM VOLTAGE AND RESONANT FREQUENCY AT MINIMUM VOLTAGE OF ALTERNATE CURRENT SIGNAL TRANSMITTED TO VIBRATION MOTOR THAT GENERATES VIBRATION OF PRESET VIBRATION STRENGTH

~660

STORE IDENTIFIED COMBINATION OF MINIMUM VOLTAGE AND RESONANT FREQUENCY IN MEMORY

FIG. 6

101

SENSOR (250)

TEMPERATURE SENSOR (252)

ACCELERATION SENSOR (254)

HALL SENSOR (256)

VIBRATION MOTOR CONTROLLER (230)

MAIN CONTROLLER (710)

FREQUENCY CONTROLLER (720)

VOLTAGE CONTROLLER (730)

ALTERNATE CURRENT SIGNAL GENERATOR (740)

110

DISPLAY

PROCESSOR (210)

MEMORY (220)

CONTROL INFORMATION (222)

VIBRATION MOTOR (240)

SENSOR (249)

FIG. 7

FIG. 8

FIG. 9

FIG. 10

FIG. 11

~1210

IDENTIFY EXTERNAL OBJECT ATTACHED TO
ELECTRONIC DEVICE

~1220

IDENTIFY INPUT FOR CALIBRATION FOR
VIBRATION MOTOR

~1230

OBTAIN ENVIRONMENT INFORMATION OF
ELECTRONIC DEVICE INCLUDING TEMPERATURE
AND/OR POSTURE OF ELECTRONIC DEVICE

1240

ENVIRONMENT INFORMATION
SATISFYING CONDITION FOR
CALIBRATION IS OBTAINED?

YES

NO

~1260

IDENTIFY COMBINATION OF RESONANT
FREQUENCY AND VOLTAGE BASED ON
VIBRATION MOTOR CONTROLLED TO
OUTPUT VIBRATION OF PRESET
VIBRATION STRENGTH

~1250

CHANGE RESONANT FREQUENCY USED TO
DRIVE VIBRATION MOTOR BASED ON
TEMPERATURE INDICATED BY
ENVIRONMENT INFORMATION

~1270

STORE COMBINATION OF RESONANT
FREQUENCY AND VOLTAGE

~1280

CONTROL VIBRATION MOTOR BASED ON
STORED RESONANT FREQUENCY AND
VOLTAGE IN RESPONSE TO EVENT FOR
VIBRATION NOTIFICATION

FIG. 12

FIG. 13

1410

TRANSMIT POWER SIGNAL TO
VIBRATION MOTOR

1420

IDENTIFY VIBRATION STRENGTH OF
VIBRATION GENERATED BY
VIBRATION MOTOR

1440

ADJUST VOLTAGE OF POWER SIGNAL
BEING TRANSMITTED TO
VIBRATION MOTOR

1430

VIBRATION STRENGTH
CORRESPONDING TO PRESET
VIBRATION STRENGTH HAS
BEEN IDENTIFIED?

NO

YES

1450

STORE VOLTAGE OF POWER SIGNAL
BEING TRANSMITTED TO VIBRATION MOTOR

1460

STOP TRANSMITTING POWER SIGNAL TO
VIBRATION MOTOR

1470

IDENTIFY BACK-ELECTROMOTIVE FORCE
GENERATED BY VIBRATION MOTOR

1480

OBTAIN RESONANT FREQUENCY BASED ON
IDENTIFIED BACK-ELECTROMOTIVE FORCE

1490

STORE OBTAINED RESONANT FREQUENCY

FIG. 14

FIG. 15

| | INTERNATIONAL SEARCH REPORT | International application No. |
|---|---|---|
| | | **PCT/KR2024/003312** |

## A. CLASSIFICATION OF SUBJECT MATTER

**H02P 25/032**(2016.01)i; **H02P 29/60**(2016.01)i; **B06B 1/02**(2006.01)i; **H04M 19/04**(2006.01)i; **G06F 3/01**(2006.01)i; **H02K 33/04**(2006.01)i

According to International Patent Classification (IPC) or to both national classification and IPC

## B. FIELDS SEARCHED

Minimum documentation searched (classification system followed by classification symbols)

H02P 25/032(2016.01); B06B 1/04(2006.01); G06F 3/16(2006.01); H02K 19/08(2006.01); H02K 33/04(2006.01); H02K 33/12(2006.01); H02K 41/02(2006.01); H02P 6/28(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 진동 모터(vibration motor), 공진 주파수(resonant frequency), 교류 신호(alternating current signal), 전압(voltage), 온도 센서(temperature sensor)

## C. DOCUMENTS CONSIDERED TO BE RELEVANT

| Category* | Citation of document, with indication, where appropriate, of the relevant passages | Relevant to claim No. |
|---|---|---|
| Y | KR 10-1070106 B1 (SAMSUNG ELECTRO-MECHANICS CO., LTD.) 05 October 2011 (2011-10-05)<br>See paragraphs [0061] and [0065]; and figures 1-4. | 1-4,9-11 |
| Y | KR 10-2018-0083710 A (SAMSUNG ELECTRONICS CO., LTD.) 23 July 2018 (2018-07-23)<br>See paragraphs [0077], [0097] and [0115]; claim 3; and figure 4. | 1-4,9-11 |
| Y | US 2022-0209694 A1 (INDUSTRIAL TECHNOLOGY RESEARCH INSTITUTE) 30 June 2022 (2022-06-30)<br>See paragraph [0041]; and figures 1-2 and 5. | 2,10 |
| A | KR 10-2005-0083528 A (SAMSUNG ELECTRO-MECHANICS CO., LTD.) 26 August 2005 (2005-08-26)<br>See claim 1. | 1-4,9-11 |
| A | US 2020-0412222 A1 (APPLE INC.) 31 December 2020 (2020-12-31)<br>See claim 1. | 1-4,9-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 June 2024** | **25 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/003312**

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **5-8, 12-15**
because they are dependent claims and are not drafted in accordance with the second and third sentences of Rule 6.4(a).

Form PCT/ISA/210 (continuation of first sheet) (July 2022)

<div align="center">

**INTERNATIONAL SEARCH REPORT**
**Information on patent family members**

</div>

International application No.

**PCT/KR2024/003312**

| Patent document cited in search report | | | Publication date (day/month/year) | Patent family member(s) | | | Publication date (day/month/year) |
|---|---|---|---|---|---|---|---|
| KR | 10-1070106 | B1 | 05 October 2011 | | None | | |
| KR | 10-2018-0083710 | A | 23 July 2018 | US | 11216070 | B2 | 04 January 2022 |
| | | | | US | 2019-0354186 | A1 | 21 November 2019 |
| | | | | WO | 2018-131841 | A1 | 19 July 2018 |
| US | 2022-0209694 | A1 | 30 June 2022 | US | 11374515 | B1 | 28 June 2022 |
| KR | 10-2005-0083528 | A | 26 August 2005 | CN | 100521466 | C | 29 July 2009 |
| | | | | CN | 1661891 | A | 31 August 2005 |
| | | | | KR | 10-0593900 | B1 | 28 June 2006 |
| | | | | US | 2005-0184601 | A1 | 25 August 2005 |
| | | | | US | 7358633 | B2 | 15 April 2008 |
| US | 2020-0412222 | A1 | 31 December 2020 | US | 11496034 | B2 | 08 November 2022 |

Form PCT/ISA/210 (patent family annex) (July 2022)